(19) Europäisches Patentamt
European Patent Office
Office européen des brevets

(11) Numéro de publication: **0 366 569 B1**

(12) **FASCICULE DE BREVET EUROPEEN**

(45) Date de publication de fascicule du brevet: **22.03.95**

(51) Int. Cl.[6]: **C01F 11/46**, C09C 1/02, D21H 19/38

(21) Numéro de dépôt: **89420374.4**

(22) Date de dépôt: **02.10.89**

(54) **Agent de compatibilité pour suspensions aqueuses polypigmentaires dont l'un des pigments est du sulfate de calcium hydraté.**

(30) Priorité: **10.10.88 FR 8813511**

(43) Date de publication de la demande:
**02.05.90 Bulletin 90/18**

(45) Mention de la délivrance du brevet:
**22.03.95 Bulletin 95/12**

(84) Etats contractants désignés:
**AT BE DE ES GB IT NL SE**

(56) Documents cités:
**EP-A- 0 100 947**
**EP-A- 0 216 681**
**EP-A- 0 278 880**
**DE-A- 3 123 732**
**DE-A- 3 603 392**
**US-A- 2 284 585**

**PATENT ABSTRACTS OF JAPAN, vol. 6, no. 202 (C-129)[1080], 13 octobre 1982;& JP-A-57 110 329**

(73) Titulaire: **COATEX S.A.**
**35, Cours Aristide Briand**
**F-69300 Caluire (FR)**

(72) Inventeur: **Mongoin, Jacques**
**76bis, rue Lanessan**
**F-69410 Champagne au Mont d'Or (FR)**
Inventeur: **Ravet, Georges**
**Route Louis Pradel**
**F-69290 Saint Genis les Ollières (FR)**
Inventeur: **Suau, Jean-Marc**
**249, La Duchère Plateau**
**F-69009 Lyon (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

### Domaine de l'invention

L'invention concerne l'utilisation d'un copolymère éthylénique comme agent de compatibilité, de dispersion et/ou de broyage pour des suspensions aqueuses pigmentaires formulées à partir d'un mélange de pigments minéraux dont l'un au moins est du sulfate de calcium hydrate en vue d'annihiler l'effet viscosifiant provogué par leur incompatibilité.

L'invention concerne également un nouvel agent de compatibilité, de dispersion et/ou de broyage pour des suspensions aqueuses pigmentaires formulées à partir d'un mélange de pigments minéraux dont l'un au moins est du sulfate de calcium hydraté.

L'invention concerne aussi les suspensions aqueuses pigmentaires contenant l'agent de dispersion et/ou de broyage formulées à partir d'un mélange de pigments dont l'un au moins est du sulfate de calcium hydraté.

L'invention concerne enfin l'application nouvelle au domaine papetier et plus particulièrement au couchage des suspensions aqueuses pigmentaires précitées contenant l'agent.

### Arrière-plan de l'invention

Quand des suspensions aqueuses pigmentaires sont préparées à partir d'un mélange de pigments minéraux, il se produit fréquemment une augmentation extrêmement rapide et importante de leur viscosité qui peut atteindre la prise en masse desdites suspensions.

Ce phénomène, qui est lié à l'incompatibilité des pigments entre eux, se produit par exemple dans les suspensions contenant un mélange de $CaCO_3$ et d'oxyde de titane, de $CaCO_3$ et de kaolin, de $CaCO_3$, d'oxyde de titane et de kaolin.

Connu de l'homme de l'art sous l'expression "effet de choc", cet effet viscosifiant se produit aussi, mais d'une manière amplifiée, dans le cas de suspensions aqueuses pigmentaires contenant simultanément du sulfate de calcium hydraté et du carbonate de calcium, ou encore du sulfate de calcium hydraté, du kaolin et du carbonate de calcium.

Or, le sulfate de calcium hydraté est un pigment minéral encore peu exploité en tant que tel, mais qui peut, dans l'avenir, révéler des qualités potentiellement intéressantes dans le domaine de la charge de masse ou du couchage du papier en vue d'en améliorer l'opacité, la brillance, la tenue à l'eau, l'impression et la blancheur (brevets FR 2,370,124 ; FR 2,343,082 ; FR 2,440,437 ; FI 67,568).

Aussi, pour satisfaire la mise en oeuvre de suspensions aqueuses pigmentaires formulées à partir d'un mélange de pigments minéraux dont l'un au moins est du sulfate de calcium hydraté, il apparaît souhaitable de pouvoir utiliser dans lesdites suspensions un agent capable simultanément de favoriser la dispersion des particules pigmentaires et d'éliminer l'effet de choc en rendant les pigments compatibles entre eux.

Or, depuis de nombreuses années, la littérature spécialisée s'est faite l'écho des recherches pratiquées pour éliminer l'effet de choc se produisant entre le sulfate de calcium hydraté et d'autres pigments quand ils sont mis en oeuvre simultanément dans des suspensions aqueuses pigmentaires.

Dans un premier document (EP 0 216 516), un agent de compatibilité est décrit pour permettre de réaliser des suspensions aqueuses comportant comme pigments un mélange de gypse (dont 70% des particules ont une dimension inférieure à 2 microns), de kaolin (dont 80% des particules ont une dimension inférieure à 2 microns) et de carbonate de calcium (dont 86% des particules ont une dimension inférieure à 2 microns).

L'agent de compatibilité préconisé est formé d'un ester alkylphosphate ou d'un polyacrylate dont 15% au moins des sites carboxyliques sont estérifiés.

De cette manière, des suspensions aqueuses, contenant en mélange du sulfate de calcium hydraté et du carbonate de calcium ou du kaolin, ont été préparées en présence de l'agent de compatibilité précité, qu'il soit un ester alkylphosphate ou un polyacrylate partiellement estérifié. Mais, pour parvenir à des viscosités raisonnables lors de la mise en oeuvre industrielle, la concentration de ces suspensions n'a pu être portée au-delà de 56% en poids de matière sèche.

De plus, et dans le cas de l'utilisation d'un ester alkylphosphate comme agent de compatibilité, apparaît une contrainte nouvelle de devoir opérer en un milieu de pH au plus égal à 7 pour que la rhéologie de la suspension pigmentaire reste dans des valeurs acceptables pour les applications envisagées. A contrario, quand le pH dépasse cette valeur de 7, il n'est plus possible de maîtriser la viscosité du mélange de pigments en suspension, cette viscosité augmentant très rapidement d'une manière néfaste.

Dès lors, comme les suspensions aqueuses pigmentaires pour le couchage du papier doivent habituellement disposer d'une concentration en matière sèche d'au moins 65% et d'un pH compris entre 8 et 11, l'agent de compatibilité préconisé dans ledit brevet devient inapplicable dans le domaine du couchage du papier.

Dans un autre document (EP 0227623), un agent de compatibilité choisi parmi des sels d'alkylamines acides est proposé pour réguler la viscosité de suspensions aqueuses pigmentaires destinées au couchage du papier et contenant un mélange de sulfate de calcium, de kaolin et/ou de carbonate de calcium.

Mais il n'a pas été possible de porter la teneur en matière sèche de ces suspensions à une valeur supérieure à 56% en poids sans provoquer une augmentation de la viscosité insupportable pour les applications de couchage papier.

La littérature spécialisée a également préconisé ( FR 2,370, 124) l'usage d'un agent de compatibilité pour stabiliser des suspensions aqueuses pigmentaires destinées au couchage du papier et contenant en mélange du trihydroxyde d'aluminium et du sulfate de calcium hydraté de granulométrie inférieure à 20 micromètres, cet agent de compatibilité des pigments étant formé de l'ester-phosphate d'amidon dépolymérisé, éventuellement accompagné pour son action d'un agent de dispersion classique.

Mais de telles compositions pigmentaires ne peuvent être utilisées dans le domaine du couchage du papier que si l'utilisateur se contente d'une teneur en matière sèche faible (de l'ordre de 50% en poids) pour maîtriser la rhéologie, ce fait apparaissant comme un désavantage certain.

Enfin, il a été préconisé (GB 2,173,781) pour la fabrication de slurry de sulfate de calcium hydraté d'utiliser comme agent dispersant un mélange d'un agent surfactant intervenant à forte concentration, choisi dans le groupe des sulfates ou sulfonates organiques, et d'un agent complexant choisi parmi les phosphates inorganiques et les amines. Mais, comme la demanderesse a pu le constater, un tel mélange d'agents surfactants et complexants ne permet pas de parvenir à la compatibilité recherchée entre le sulfate de calcium hydraté et les autres pigments habituellement utilisés pour le couchage du papier.

Dès lors, un premier objet de l'invention vise à créer un agent de compatibilité éliminant l'effet de choc mentionné antérieurement, rendant possible la présence simultanée de sulfate de calcium hydraté et d'autres pigments au sein de suspensions aqueuses pigmentaires, sans provoquer l'augmentation de la viscosité habituellement observée.

Un autre objet de l'invention vise à créer un agent de compatibilité éliminant l'effet de choc qui soit également un agent de broyage efficace pour permettre l'affinage du sulfate de calcium hydraté grossier, seul ou en mélange avec d'autres matériaux minéraux autres que des argiles gonflantes.

Un autre objet de l'invention vise à créer des suspensions aqueuses pigmentaires plus concentrées que dans l'art connu, préparées à partir de mélanges de pigments minéraux dont l'un au moins est du sulfate de calcium hydraté, dont la présence simultanée au sein desdites suspensions est rendue possible grâce à l'agent de compatibilité.

## Sommaire de l'invention

Poursuivant ses recherches, la demanderesse a maintenant mis au point l'utilisation d'un copolymère éthylénique comme agent de compatibilité disposant simultanément des propriétés souhaitées précédemment évoquées comme buts à atteindre, et libéré des inconvénients observés.

Selon l'invention, l'utilisation d'un copolymère éthylénique comme agent de compatibilité, de dispersion et de broyage pour suspensions aqueuses pigmentaires formulées à partir d'un mélange de pigments minéraux, dont l'un au moins est du sulfate de calcium hydraté en vue d'annihiler l'effet viscosifiant provoqué par la présence dudit sulfate, se caractérise en ce que, ledit agent est un copolymère de formule générale :

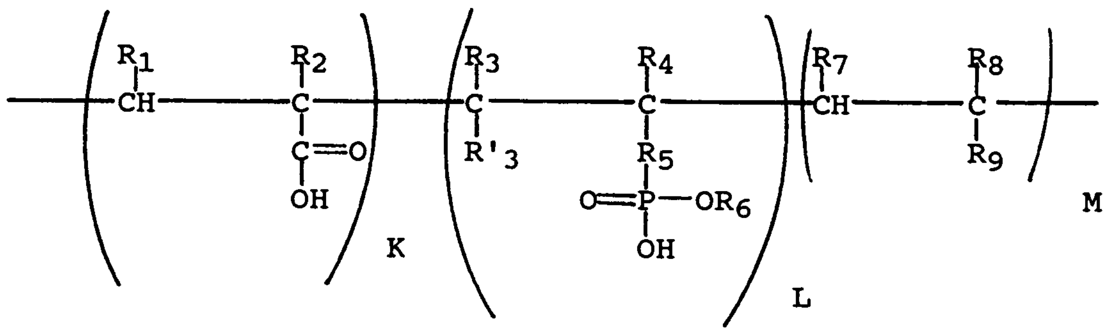

symbolisé par la formule :

$$-(A)_K-(B)_L-(C)_M$$

dans laquelle le momomère éthylénique (B) possède une fonction phosphatée ou phosphonée, le monomère (A) est un monomère éthylénique à fonction carboxylique et le monomère (C) est un monomère éthylénique du type ester ou substitués, et dans laquelle L prend une valeur comprise entre 5 et 95 parties en poids avec K + L + M = 100 parties en poids, K et M pouvant séparément prendre la valeur 0.

Dans le but de résoudre le problème précédemment invogué, la Demanderesse a également mis au point un nouvel agent de compatibilité, de dispersion et/ou de broyage pour suspensions aqueuses pigmentaires formulées à partir d'un mélange de pigments minéraux, dont l'un au moins est du sulfate de calcium hydraté en vue d'annihiler l'effet viscosifiant provoqué par la présence dudit sulfate, caractérisé en ce que ledit agent est un copolymère de formule générale :

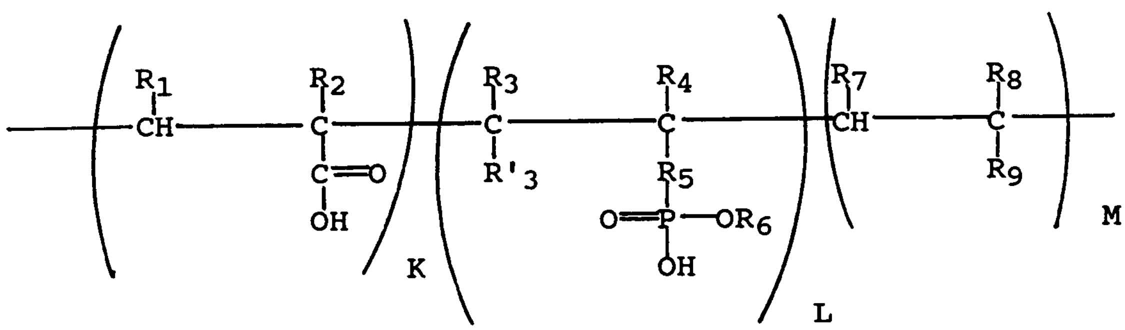

symbolisé par la formule : $-(A)_K-(B)_L-(C)_M$
dans laquelle le momomère éthylénique (B) possède une fonction phosphatée ou phosphonée, le monomère (A) est un monomère éthylénique à fonction carboxylique et le monomère (C) est un monomère éthylénique du type ester ou substitués, et dans laquelle L prend une valeur comprise entre 5 et 95 parties en poids avec K + L + M = 100 parties en poids, K et M pouvant séparément prendre la valeur 0, à l'exception de ceux décrits dans la demande de brevet européen EP 0 305 850 publiée le 8 mars 1989, ainsi que dans la demande de brevet français FR 2 536 758 et dans la demande de brevet européen EP 0 221 498.

## Description détaillée de l'invention

Ainsi, alors que l'art antérieur décrit pour l'essentiel des agents de compatibilité ou de dispersion résultant de mélanges de produits connus, l'agent selon l'invention se distingue de l'art antérieur par le fait qu'il concentre grâce à une seule structure moléculaire toutes les fonctions propres à créer des effets de compatibilité interpigmentaires, permettant de réaliser la dispersion et le broyage desdits pigments dont l'un au moins est du sulfate de calcium.

De plus, alors que l'art antérieur révèle seulement la mise en suspension d'un mélange de pigments contenant du sulfate de calcium hydraté grossier à des concentrations ne dépassant pas 56% en poids de

matière sèche, l'agent selon l'invention est à l'origine d'un effet synergique permettant simultanément d'affiner et d'acquérir l'effet de compatibilité interpigmentaire à des concentrations supérieures à celles de l'art antérieur, tout en maîtrisant favorablement la rhéologie des suspensions pour l'industrie papetière.

L'utilisation, selon l'invention, d'un copolymère éthylénique comme agent de compatibilité se caractérise en ce que dans la formule précitée du copolymère :

- $R_1$ peut être l'hydrogène ou une fonction carboxylique estérifiée ou non par un alcool en $C_1$ à $C_{12}$ et de préférence en $C_1$ à $C_3$,
- $R_2$ peut être l'hydrogène ou un alkyl en $C_1$ à $C_{12}$ et de préférence en $C_1$ à $C_3$,
- $R_3$ et $R'_3$ peuvent être l'hydrogène ou un alkyle en $C_1$ à $C_{12}$ et préférentiellement en $C_1$ à $C_3$, un aryle substitué ou non ou une fonction carboxylique ou un halogène,
- $R_4$ peut être l'hydrogène ou un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est un groupement d'atomes liant le phosphore à la chaîne polymérique par une fonction phosphate

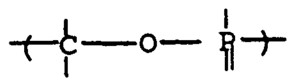

ou par une fonction phosphonate

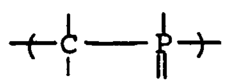 .

Dans le cas où la fonction est du type phosphate, $R_5$ peut être :

- soit un ester carboxylique d'oxyde d'éthylène ou d'oxyde de propylène répondant à la formule :

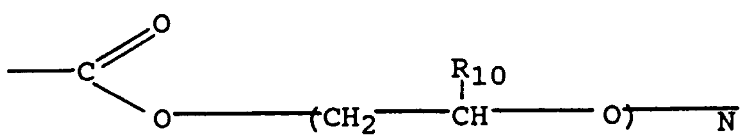

dans laquelle $R_{10}$ peut être l'hydrogène ou un groupement méthyle et N peut prendre des valeurs de l'intervalle 1 à 50 et de préférence 1 à 10,

- soit un ester carboxylique d'alkyle, d'aryle ou d'alkaryle de formule :

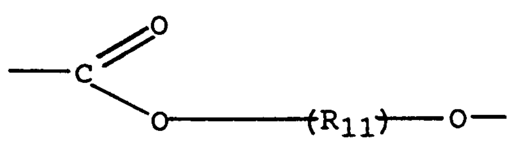

dans laquelle $R_{11}$ peut prendre les valeurs $C_1$ à $C_{12}$,

- soit un amide substitué de formule :

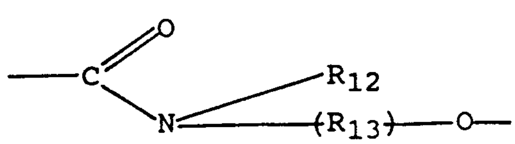

dans laquelle $R_{12}$ est l'hydrogène ou un alkyle en $C_1$ à $C_{12}$ et de préférence de $C_1$ à $C_3$, un aryle en

$C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,

- soit de l'oxygène.

Dans le cas où la fonction est de type phosphonate, $R_5$ peut être un alkyle en $C_1$ à $C_{12}$ et de préférence en $C_1$ à $C_3$, un aryle en $C_5$ ou $C_6$ substitué ou non, un alkaryle, un ester en $C_1$ à $C_{12}$ et de préférence en $C_1$ à $C_3$, un amide substitué,

- $R_6$ peut être l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$ et de préférence en $C_1$ à $C_3$, un aryle en $C_5$ ou $C_6$, un alkaryle,
- $R_8$ peut être l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté.

Le nouvel agent selon l'invention de formule générale précitée se caractérise en ce que :

- $R_1$ peut être l'hydrogène ou une fonction carboxylique estérifiée ou non par un alcool en $C_1$ à $C_{12}$ et de préférence en $C_1$ à $C_3$,
- $R_2$ peut être l'hydrogène ou un alkyl en $C_1$ à $C_{12}$ et de préférence en $C_1$ à $C_3$,
- $R_3$ et $R'_3$ peuvent être l'hydrogène ou un alkyle en $C_1$ à $C_{12}$ et préférentiellement en $C_1$ à $C_3$, un aryle substitué ou non ou une fonction carboxylique ou un halogène,
- $R_4$ peut être l'hydrogène ou un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est un groupement d'atomes liant le phosphore à la chaîne polymérique par une fonction phosphate

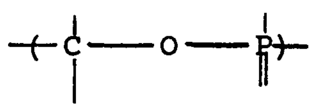

ou par une fonction phosphonate

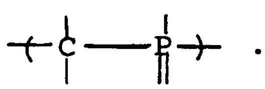

Dans le cas où la fonction est du type phosphate, $R_5$ peut être :

- soit un ester carboxylique d'oxyde d'éthylène ou d'oxyde de propylène répondant à la formule :

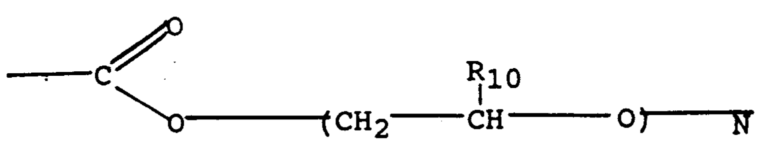

dans laquelle $R_{10}$ peut être l'hydrogène ou un groupement méthyle et N peut prendre des valeurs de l'intervalle 1 à 50 et de préférence 1 à 10, à l'exception de la valeur 1 lorsque L a une valeur comprise entre 5 et 8 parties en poids et que $R_3$ et $R'_3$ sont l'hydrogène et $R_4$ est l'hydrogène ou un alkyle en $C_1$ à $C_8$, ainsi qu'à l'exception des valeurs 1 à 30 lorsque $R_1$, $R_3$, $R'_3$, $R_6$ et $R_7$ sont l'hydrogène, $R_2$ et $R_4$ sont l'hydrogène ou un radical alkyle en $C_1$ à $C_{12}$, $R_8$ est l'hydrogène ou un radical alkyle en $C_1$ à $C_3$ et $R_9$ est un amide non substitué avec K et M différents de 0, ou bien encore lorsque $R_3$, $R'_3$ et $R_6$ sont l'hydrogène, $R_4$ est l'hydrogène ou un radical alkyle en $C_1$ à $C_{12}$, $R_7$ et $R_8$ sont l'hydrogène ou un radical alkyle en $C_1$ à $C_3$ et $R_9$ est un ester en $C_1$ à $C_{12}$ ou un aryle en $C_5$ ou $C_6$.

- soit un ester carboxylique d'alkyle, d'aryle ou d'alkaryle de formule :

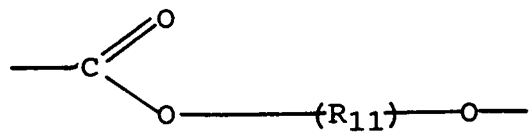

dans laquelle $R_{11}$ peut prendre les valeurs $C_1$ à $C_{12}$, à l'exception des valeurs $C_1$ à $C_8$ lorsque L a une valeur comprise entre 5 et 8 parties en poids et que $R_3$ et $R'_3$ sont l'hydrogène et $R_4$ est l'hydrogène ou un alkyle en $C_1$ à $C_8$ , ainsi qu'à l'exception des valeurs $C_1$ à $C_{12}$ lorsque : $R_1$, $R_3$, $R'_3$, $R_6$ et $R_7$ sont l'hydrogène, $R_2$ et $R_4$ sont l'hydrogène ou un radical alkyle en $C_1$ à $C_{12}$, $R_8$ est l'hydrogène ou un radical alkyle en $C_1$ à $C_3$ et $R_9$ est un amide non substitué avec K et M différents de 0, ou bien encore lorsque $R_3$, $R'_3$ et $R_6$ sont l'hydrogène, $R_4$ est l'hydrogène ou un radical alkyle en $C_1$ à $C_{12}$, $R_7$ et $R_8$ sont l'hydrogène ou un radical alkyle en $C_1$ à $C_3$ et $R_9$ est un ester en $C_1$ à $C_{12}$ ou un aryle en $C_5$ ou $C_6$.
- soit un amide substitué de formule :

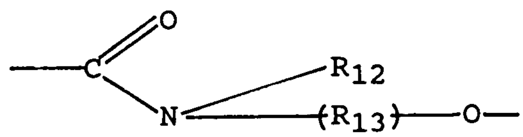

dans laquelle $R_{12}$ est l'hydrogène ou un alkyle en $C_1$ à $C_{12}$ et de préférence de $C_1$ à $C_3$, un aryle en $C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,
- soit de l'oxygène.

Dans le cas où la fonction est de type phosphonate, $R_5$ peut être un alkyle en $C_1$ à $C_{12}$ et de préférence en $C_1$ à $C_3$, un aryle en $C_5$ ou $C_6$ substitué ou non, un alkaryle, un ester en $C_1$ à $C_{12}$ et de préférence en $C_1$ à $C_3$, un amide substitué,

- $R_6$ peut être l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$ et de préférence en $C_1$ à $C_3$, un aryle en $C_5$ ou $C_6$, un alkaryle,
- $R_8$ peut être l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté.

Ces copolymères acides résultent de la copolymérisation selon les procédés connus, en présence d'initiateurs et des régulateurs appropriés, en milieu auqueux, alcoolique, hydraoalcoolique, aromatique, aliphatique ou dans un solvant halogénéné, d'au moins deux monomères éthyléniques dont l'un possède une fonction phosphatée ou phosphonée à pression atmosphérique ou sous pression.

Ainsi, le milieu de polymérisation peut être l'eau, le méthanol, l'éthanol, le propanol, l'isopropanol, les butanols, ou encore le diméthylformamide, le diméthylsufoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

Les copolymères destinés à être utilisés comme agent de compatibilité, dispersion et broyage selon l'invention sont généralement choisis parmi ceux ayant une viscosité spécifique comprise entre 0,2 et 10,0 et préférentiellement entre 0,25 et 5,0, et très préférentiellement entre 0,4 et 1,2.
La viscosité spécifique des copolymères qui est symbolisée par la lettre "$\eta$" est déterminée de la manière suivante : On prépare une solution de copolymère sous forme de sel sodique, par dissolution de 50 g sec du copolymère dans un litre d'une solution d'eau distillée contenant 60 g de chlorure de sodium.

Puis on mesure avec un viscosimètre capillaire placé dans un bain thermostaté à 25 °C le temps d'écoulement d'un volume donné de la solution précitée contenant le copolymère alcalin, ainsi que le temps d'écoulement du même volume de solution aqueuse de chlorure de sodium dépourvue dudit copolymère. Il est alors possible de définir la viscosité spécifique "$\eta$" grâce à la relation suivante :

$$\eta = \frac{(\text{temps d'écoulement de la solution de copolymère}) - (\text{temps d'écoulement de la solution NaCl})}{(\text{temps d'écoulement de la solution NaCl})}$$

Le tube capillaire est généralement choisi de telle manière que le temps d'écoulement de la solution de NaCl dépourvue de copolymère soit d'environ 90 à 100 secondes, donnant ainsi des mesures de viscosité spécifique d'une très bonne précision.

Dès la fin de la polymérisation, les copolymères acides selon l'invention en solution aqueuse sont recueillis et peuvent être mis en oeuvre sous cette forme.

Selon une variante qui s'est révelée être intéressante, les copolymères selon l'invention en solution aqueuse peuvent être totalement ou partiellement neutralisés par un agent de neutralisation disposant d'une fonction monovalente. Toutefois, à cet agent monovalent peut être associé un agent de neutralisation ayant une fonction polyvalente.

Dans le premier cas, l'agent de neutralisation est souhaitablement choisi dans le groupe constitué par les cations alcalins et assimilés, en particulier le lithium, le sodium, le potassium, l'ammonium ou amine éventuellement polysubstituée. Cet agent, dans le deuxième cas, peut être associé à un agent du groupe des alcalino-terreux ou assimilés, préférentiellement le calcium et le magnésium.

En pratique, la phase liquide résultant de la copolymérisation et contenant le copolymère acide peut être utilisée sous une forme salifiée comme agent de délitage ou broyage, mais elle peut également être séchée par tous moyens connus pour en éliminer cette phase et isoler le copolymère sous la forme d'une fine poudre et être utilisée sous cette autre forme comme agent de compatibilité, dispersion ou broyage.

Dans une plus large perspective, l'agent selon l'invention peut être mis en oeuvre selon la méthode de préparation d'une suspension aqueuse pigmentaire contenant au moins du sulfate de calcium hydraté, ladite méthode comportant les étapes de réalisation suivantes :

a) on réalise sous agitation la préparation par délitage d'une suspension aqueuse de sulfate de calcium hydraté, seul ou en mélange, en introduisant d'abord tout ou partie de l'agent selon l'invention dans la phase aqueuse, puis le(s) pigment(s) de manière à obtenir une suspension fluide et souhaitablement homogène,

b) on introduit en continu la suspension préparée selon (a) dans une zone de broyage constituée par un broyeur à microéléments,

c) on maintient la température de la suspension au cours du broyage à un niveau inférieur à 100 °C et préférentiellement comprise entre la température ambiante et 80 °C,

d) on malaxe la suspension à broyer en présence des microéléments pendant le temps nécessaire à l'obtention de la granulométrie recherchée,

e) éventuellement, on introduit au cours du broyage en au moins une fois une fraction complémentaire de l'agent.

f) à la sortie du broyeur, on sépare en continu la suspension de $CaSO_4$, $2H_2O$ seul ou en mélange finement broyée d'avec les corps broyants et les particules refusées parce que trop grossières,

g) éventuellement, on introduit dans la suspension finement broyée au moins un agent modificateur de la rhéologie.

Si le(s) pigment(s) mis en oeuvre ont une courbe granulométrique conforme aux exigences de l'utilisateur, seule l'étape (a) est réalisée. Dans le cas contraire, on procède aux étapes suivantes, c'est-à-dire (b) à (g), afin de produire une suspension aqueuse de pigments affinés par broyage et rendus compatibles entre eux.

L'agent selon l'invention est introduit dans la suspension aqueuse pigmentaire à raison de 0.05 à 4% en poids de matières actives par rapport au poids sec des matériaux minéraux, et préférentiellement à raison de 0.5 à 2.5%.

La suspension recueillie à l'issue du délitage et/ou broyage a généralement une concentration en matière sèche d'au moins 65%, et préférentiellement comprise dans l'intervalle de 70 à 80% en poids, la

dimension des particules pigmentaires obtenues étant définie en cas de broyage par l'utilisateur.

La suspension pigmentaire ainsi affinée grâce à la présence de l'agent selon l'invention peut être avantageusement utilisée comme charge pigmentaire dans la fabrication du papier, de la peinture et des matières plastiques.

La portée et l'intérêt de l'invention seront mieux perçus grâce aux exemples illustratifs et comparatifs à l'égard de l'art antérieur.

Exemple 1

Cet exemple, dont le but est d'illustrer l'art connu, concerne la préparation d'une suspension de sulfate de calcium hydraté par délitage.

Dans ce but, plusieurs suspensions de sulfate de calcium hydraté ont été préparées avec 19 types d'agents dispersants ou de compatibilité, tels qu'ils sont décrits dans l'art antérieur.

Toutes les suspensions (essais 1 à 19) ont été réalisées avec le même sulfate de calcium de granulométrie moyenne de l'ordre de 15 micromètres, la concentration des suspensions étant fixée à 68% en poids de matière sèche et le taux de l'agent réglé à 1% en poids de matière active par rapport à la matière pigmentaire.

Les suspensions ont été préparées dans le même appareillage selon l'étape (a) du procédé antérieurement décrit à température ambiante.

Les caractéristiques et résultats concernant les essais 1 à 19 ont été regroupés dans le Tableau I (et suite) ci après.

TABLEAU I

Délitage du $CaSO_4$, $2H_2O$ selon l'Art Antérieur

| NUMERO | TYPE DE POLYMERE | POURCENTAGE D'AGENT | CONCENTRATION DE LA SUSPENSION | DIAMETRE MOYEN DES PARTICULES EN MICROMETRE | VISCOSITE BROOKFIELD après 24 Heures | |
|---|---|---|---|---|---|---|
| | | | | | 10 TOURS | 100 TOURS |
| 1 | Polyacrylate de sodium - Viscosité spécifique 0,40 | 1 | 68 | 15 | 2000 | 650 |
| 2 | Polyacrylate de sodium - Viscosité spécifique 0,57 | 1 | 68 | 15 | 1800 | 700 |
| 3 | Polyacrylate de sodium - Viscosité spécifique 0,30 | 1 | 68 | 15 | 2700 | 770 |
| 4 | Polyacrylate de sodium - Viscosité spécifique 0,70 | 1 | 68 | 15 | 3700 | 1300 |
| 5 | Polyméthacrylate de sodium - Viscosité spécifique 0,55 | 1 | 68 | 15 | 18000 | 3900 |
| 6 | Lignosulfonate de chrome | 1 | 68 | 15 | 10200 | 1600 |
| 7 | Monoester phosphate d'alcool en $C_6$ acide | 1 | 68 | 15 | 2100 | 800 |
| 8 | Monoester phosphate d'alcool en $C_{10}$ acide | 1 | 68 | 15 | 4100 | 1450 |
| 9 | Monoester phosphate d'alcool en $C_6$ sel de sodium | 1 | 68 | 15 | PRISE EN MASSE | |
| 10 | Phosphate d'alcool en $C_{10}$ sel de sodium | 1 | 68 | 15 | PRISE EN MASSE | |
| 11 | DODECYL Benzène sulfonate de calcium + Pyrophosphate de sodium | 0,6<br>0,4 | 68 | 15 | 8400 | 1680 |

SUITE TABLEAU I

| NUMERO | TYPE DE POLYMERE | POURCENTAGE D'AGENT | CONCENTRATION DE LA SUSPENSION | DIAMETRE MOYEN DES PARTICULES EN MICROMETRE | VISCOSITE BROOKFIELD après 24 Heures | |
|---|---|---|---|---|---|---|
| | | | | | 10 TOURS | 100 TOURS |
| 12 | Oléfine $C_{16}$ - Sulfonate de sodium + <br> Pyrophosphate de sodium | 0,6 <br> 0,4 | 68 | 15 | 7200 | 950 |
| 13 | Carboxy méthyl cellulose + <br> Monoester phosphate d'alcool en $C_6$ acide | 0,6 <br> 0,4 | 68 | 15 | 8100 | 1120 |
| 14 | Carboxy méthyl cellulose + <br> Monoester phosphate d'alcool en $C_{10}$ acide | 0,6 <br> 0,4 | 68 | 15 | 10200 | 1700 |
| 15 | Monoester phosphate de méthacrylate d'ethylène glycol + <br> Carboxy methyl cellulose | 0,6 <br> 0,4 | 68 | 15 | 7800 | 1080 |
| 16 | Phosphate de tristyrylphénol 18 oxyéthylé | 1 | 68 | 15 | 5300 | 920 |
| 17 | Copolymère acrylamide 2 méthyl propane sulfonique (30) <br> Acide acrylique (37) <br> Acide méthacrylique (33) <br> Viscosité spécifique : 0,4 | 1 | 68 | 15 | 9500 | 1540 |
| 18 | Copolymère acide itaconique (15) <br> Acide méthacrylique (40) <br> Acide acrylique (45) <br> Viscosité spécifique : 0,4 | 1 | 68 | 15 | 10800 | 2700 |
| 19 | Sel phosphonique (Dequest 160 de Monsanto) 0,4 + <br> Copolymère n°18 7 | 1 | 68 | 15 | 8000 | 950 |

Le tableau précité amène les commentaires suivants, à savoir que les viscosités à 10 et 100 tours sont assez élevées pour un monopigment, allant dans certains cas jusqu'à la prise en masse.

Exemple 2

Cet exemple, destiné à illustrer l'objet de l'invention, concerne le délitage du même sulfate de calcium hydraté (de même origine que dans l'exemple 1) en présence de l'agent selon l'invention dans le cas où le copolymère préparé est exempt dans sa formulation du monomère C (c'est-à-dire M = 0).

A travers les essais 20 à 29, on a pu modifier la formule du copolymère en faisant varier les divers radicaux qualitativement et quantitativement ainsi que les viscosités spécifiques des copolymères mis en oeuvre, étant entendu que lesdits copolymères ont été au moins partiellement salifiés jusqu'à l'obtention d'un pH compris entre 7 et 8 au moyen du cation sodium.

Toutes les caractéristiques des suspensions préparées (essais 20 à 29) et des résultats obtenus ont été rassemblés dans le Tableau II ci-après.

TABLEAU II

Délitage $CaSO_4$, $2H_2O$ selon l'invention

| N° de l'essai | A | | | | B | | | | | | C | | | | Viscosité spécifique | Pourcentage d'agent | Concentration de la suspension (%) | Diamètre moyen des particules (micromètres) | Viscosité Brookfield après 24 heures (cP) | |
|---|---|---|---|---|---|---|---|---|---|---|---|---|---|---|---|---|---|---|---|---|
| | R1 | R2 | M1 | k | R3 | R4 | R5 | R6 | M2 | 1 | R7 | R8 | R9 | m | | | | | 10 T/mn | 100 T/mn |
| 20 | H | H | Na | 90 | H | $CH_3$ | $\overset{O}{\overset{\|}{C}}-OCH_2CH_2O$ | Na | Na/H | 10 | | | | 0 | 0,65 | 1 | 68 | 15 | 800 | 520 |
| 21 | H | H | Na | 85 | H | $CH_3$ | $\overset{O}{\overset{\|}{C}}-OCH_2CH_2O$ | Na | Na/H | 15 | | | | 0 | 0,58 | 1 | 68 | 15 | 200 | 170 |
| 22 | H | H | Na | 85 | H | H | $\overset{O}{\overset{\|}{C}}-OCH_2CH_2O$ | Na | Na/H | 15 | | | | 0 | 0,74 | 1 | 68 | 15 | 800 | 440 |
| 23 | H | H | Na | 70 | H | $CH_3$ | $\overset{O}{\overset{\|}{C}}-OCH_2CH_2O$ | Na | Na/H | 30 | | | | 0 | 0,76 | 0,3 | 68 | 15 | 850 | 600 |
| 24 | H | H | Na | 70 | H | $CH_3$ | $\overset{O}{\overset{\|}{C}}-OCH_2CH_2O$ | Na | Na/H | 30 | | | | 0 | 0,5 | 0,4 | 68 | 15 | 1050 | 750 |
| 25 | H | H | Na | 60 | H | $CH_3$ | $\overset{O}{\overset{\|}{C}}-OCH_2CH_2O$ | Na | Na/H | 40 | | | | 0 | 0,56 | 0,1 | 68 | 15 | 950 | 485 |
| 26 | H | H | Na | 50 | H | $CH_3$ | $\overset{O}{\overset{\|}{C}}-OCH_2CH_2O$ | Na | Na/H | 50 | | | | 0 | 0,43 | 0,1 | 68 | 15 | 800 | 400 |
| 27 | H | $CH_3$ | Na | 60 | H | $CH_3$ | $\overset{O}{\overset{\|}{C}}-OCH_2CH_2O$ | Na | Na/H | 40 | | | | 0 | 0,41 | 0,1 | 68 | 15 | 850 | 420 |
| 28 | H | { H | Na | 45 | H | $CH_3$ | $\overset{O}{\overset{\|}{C}}-OCH_2CH_2O$ | Na | Na/H | 40 | | | | 0 | 0,51 | 0,1 | 68 | 15 | 750 | 360 |
| | | { $CH_3$ | Na | 15 | | | | | | | | | | | | | | | | |
| 29 | H | H | Na | 20 | { H | $CH_3$ | $\overset{O}{\overset{\|}{C}}-OCH_2CH_2O$ | Na | Na/H | 40 | | | | 0 | insoluble | 0,1 | 68 | 15 | 720 | 320 |
| | | | | | { H | H | $\overset{O}{\overset{\|}{C}}-OCH_2CH_2O$ | Na | Na/H | 40 | | | | | | | | | | |

De ce Tableau II et par comparaison avec le Tableau I, il apparaît que les viscosités des suspensions selon l'invention mesurées dans les mêmes conditions que celles de l'exemple 1 sont notablement plus faibles que dans l'art connu. De ce fait, il a été possible d'abaisser la concentration en agent de compatibilité dans des proportions importantes pouvant se situer dans un rapport de 10/1.

Exemple 3

Cet exemple, destiné à illustrer l'objet de l'invention, concerne le délitage du même sulfate de calcium hydraté (de même origine que dans l'exemple 1) en présence de l'agent selon l'invention dans le cas où le copolymère préparé est exempt dans sa formulations du monomère A (c'est-à-dire K = 0).

A travers les essais 30 à 35, on a pu modifier la formule du copolymère en faisant varier les divers radicaux qualitativement et quantitativement ainsi que les viscosités spécifiques des copolymères mis en oeuvre, étant entendu que lesdits copolymères ont été au moins partiellement salifiés jusqu'à l'obtention d'un pH compris entre 7 et 8 au moyen du cation sodium.

Toutes les caractéristiques des suspensions préparées (essais 30 à 35) et des résultats obtenus ont été rassemblés dans le Tableau III ci-après.

TABLEAU III

Délitage $CaSO_4$, $2H_2O$ selon l'invention

| N° de l'essai | A: R1 | A: R2 | A: M1 | A: k | B: R3 | B: R4 | B: R5 | B: R6 | B: M2 | B: l | C: R7 | C: R8 | C: R9 | C: m | Viscosité spécifique | Pourcentage d'agent | Concentration de la suspension (%) | Diamètre moyen des particules (micromètres) | Viscosité Brookfield après 24 heures (en cP) 10 T/mn | Viscosité Brookfield après 24 heures (en cP) 100 T/mn |
|---|---|---|---|---|---|---|---|---|---|---|---|---|---|---|---|---|---|---|---|---|
| 30 | | | | 0 | H | $CH_3$ | $C(=O)-OCH_2CH_2O$ | Na | Na/H | 40 | H | H | $C(=O)-NH_2$ | 60 | | 1 | 68 | 15 | 650 | 430 |
| 31 | | | | 0 | H | $CH_3$ | $C(=O)-OCH_2CH_2O$ | Na | Na/H | 30 | H | H | $CO(CH_2)_2OH$ | 45 | | 1 | 68 | 15 | 500 | 310 |
| | | | | | | | | | | | | $CH_3$ | $OCH_3$ | 25 | | | | | | |
| 32 | | | | 0 | H | $CH_3$ | - | Na | Na/H | 40 | H | H | $C(=O)-NH_2$ | 60 | 0,6 | 0,5 | 68 | 15 | 1040 | 420 |
| 33 | | | | 0 | H | $CH_3$ | - | Na | Na/H | 40 | H | $CH_3$ | $C(=O)-CH_2-CH_2OH$ | 60 | 0,55 | 0,5 | 68 | 15 | 950 | 370 |
| 34 | | | | 0 | H | $CH_3$ | - | Na | Na/H | 40 | H | H | $C(=O)-NH_2$ | 45 | 0,7 | 0,5 | 68 | 15 | 1000 | 405 |
| | | | | | | | | | | | | $CH_3$ | $C(=O)-OCH_3$ | 15 | | | | | | |
| 35 | | | | 0 | H | H | $C(=O)-NH-C(CH_3)_2-CH_2-$ | Na | Na/H | 30 | H | H | $C(=O)-NH_2$ | 70 | 0,65 | 1 | 68 | 15 | 900 | 560 |

De ce tableau et par comparaison avec le Tableau I, il apparaît que les viscosités des suspensions selon l'invention mesurées dans les mêmes conditions que celles de l'exemple 1 sont notablement plus faibles que dans l'art connu. De ce fait, il a été possible d'abaisser la concentration en agent de compatibilité dans des proportions importantes pouvant se situer dans un rapport de 2/1.

Exemple 4

Cet exemple, destiné à illustrer l'objet de l'invention, concerne le délitage du même sulfate de calcium hydraté (de même origine que dans l'exemple 1) en présence de l'agent selon l'invention dans le cas où le copolymère préparé comporte les trois monomères (A), (B) et (C), c'est-à-dire quand K et M sont simultanément différents de 0.

A travers les essais 36 à 60, on a pu modifier la formule du copolymère en faisant varier les divers radicaux qualitativement et quantitativement ainsi que les viscosités spécifiques des copolymères mis en oeuvre, étant entendu que lesdits copolymères ont été au moins partiellement salifiés jusqu'à l'obtention d'un pH compris entre 7 et 8 au moyen du cation sodium.

Toutes les caractéristiques des suspensions préparées (essais 36 à 60) et des résultats obtenus ont été rassemblés dans les Tableaux IV et IV suite ci-après.

TABLEAU IV

Délitage $CaSO_4$, $2H_2O$ selon l'invention

| N° de l'essai | A | | | | B | | | | | | C | | | | Viscosité spécifique | Pourcentage d'agent | Concentration de la suspension (%) | Diamètre moyen des particules (micromètres) | Viscosité Brookfield après 24 H (en cP) | |
|---|---|---|---|---|---|---|---|---|---|---|---|---|---|---|---|---|---|---|---|---|
| | R1 | R2 | M1 | k | R3 | R4 | R5 | R6 | M2 | 1 | R7 | R8 | R9 | m | | | | | 10 T/mn | 100 T/mn |
| 36 | H | H | Na | 70 | H | $CH_3$ | $\overset{O}{\overset{\|}{C}}-OCH_2CH_2-O$ | Na | Na/H | 15 | H | $CH_3$ | $\underset{\overset{\|}{O}}{C}-OCH_3$ | 15 | 0,46 | 0,5 | 68 | 15 | 910 | 630 |
| 37 | H | H | Na | 65 | H | $CH_3$ | $\overset{O}{\overset{\|}{C}}-OCH_2CH_2-O$ | Na | Na/H | 20 | H | $CH_3$ | $\underset{\overset{\|}{O}}{C}-OCH_3$ | 15 | 0,5 | 0,5 | 68 | 15 | 840 | 560 |
| 38 | H | H | Na | 55 | H | $CH_3$ | $\overset{O}{\overset{\|}{C}}-OCH_2CH_2-O$ | Na | Na/H | 30 | H | $CH_3$ | $\underset{\overset{\|}{O}}{C}-OCH_3$ | 15 | 0,66 | 0,3 | 68 | 15 | 680 | 340 |
| 39 | H | H | Na | 40 | H | $CH_3$ | $\overset{O}{\overset{\|}{C}}-OCH_2CH_2-O$ | Na | Na/H | 30 | H | $CH_3$ | $\underset{\overset{\|}{O}}{C}-OCH_3$ | 30 | 0,6 | 0,3 | 68 | 15 | 600 | 320 |
| 40 | H | H | Na | 45 | H | $CH_3$ | $\overset{O}{\overset{\|}{C}}-OCH_2CH_2-O$ | Na | Na/H | 40 | H | $CH_3$ | $\underset{\overset{\|}{O}}{C}-OCH_3$ | 15 | 0,54 | 0,1 | 68 | 15 | 710 | 450 |
| 41 | H | H | Na | 55 | H | H | $\overset{O}{\overset{\|}{C}}-OCH_2CH_2-O$ | Na | Na/H | 15 | H | $CH_3$ | $\underset{\overset{\|}{O}}{C}-OCH_3$ | 30 | 0,55 | 0,5 | 68 | 15 | 1020 | 730 |
| 42 | H | H | Na | 30 | H | H | $\overset{O}{\overset{\|}{C}}-OCH_2CH_2-O$ | Na | Na/H | 40 | H | $CH_3$ | $\underset{\overset{\|}{O}}{C}-OCH_3$ | 30 | 0,53 | 0,3 | 68 | 15 | 700 | 440 |
| 43 | H | $CH_3$ | Na | 45 | H | $CH_3$ | $\overset{O}{\overset{\|}{C}}-OCH_2CH_2-O$ | Na | Na/H | 40 | H | $CH_3$ | $\underset{\overset{\|}{O}}{C}-OCH_3$ | 15 | 0,49 | 0,2 | 68 | 15 | 680 | 470 |
| 44 | H | H | Na | 45 | H | $CH_3$ | $\overset{O}{\overset{\|}{C}}-OCH_2CH_2-O$ | Na | Na/H | 40 | H | H | $\underset{\overset{\|}{O}}{C}-NH_2$ | 15 | 0,60 | 0,1 | 68 | 15 | 780 | 510 |
| 45 | H | H | Na | 45 | H | $CH_3$ | $\overset{O}{\overset{\|}{C}}-OCH_2CH_2-O$ | Na | Na/H | 40 | H | H | $\underset{\overset{\|}{O}}{C}-NHCH_2OH$ | 15 | 0,55 | 0,1 | 68 | 15 | 820 | 550 |
| 46 | H | H | Na | 55 | H | $CH_3$ | $\overset{O}{\overset{\|}{C}}-OCH_2CH_2-O$ | Na | Na/H | 30 | H | H | $CO(CH_2)_2-CH_3$ | 15 | 0,52 | 0,2 | 68 | 15 | 920 | 590 |
| 47 | H | H | Na | 50 | H | $CH_3$ | $\overset{O}{\overset{\|}{C}}-OCH_2CH_2-O$ | Na | Na/H | 40 | H | H | $C-O-(CH_2CH_2O)_4-(CH_2)_{11}-CH_3$ | 10 | 0,50 | 0,4 | 68 | 15 | 840 | 530 |
| 48 | H | H | Na | 45 | H | $CH_3$ | $\overset{O}{\overset{\|}{C}}-OCH_2CH_2O$ | Na | Na/H | 40 | H | H | CN | 15 | 0,56 | 0,2 | 68 | 15 | 780 | 470 |

TABLEAU IV SUITE

Délitage du CaSO4, 2H2O selon l'invention

| N° de l'essai | A | | | | B | | | | | | C | | | | Viscosité spécifique | Pourcentage d'agent | Concentration de la suspension (%) | Diamètre moyen des particules (micromètres) | Viscosité Brookfield après 24 H (en cP) | |
|---|---|---|---|---|---|---|---|---|---|---|---|---|---|---|---|---|---|---|---|---|
| | R1 | R2 | M1 | k | R3 | R4 | R5 | R6 | M2 | l | R7 | R8 | R9 | m | | | | | 10 T/mn | 100 T/mn |
| 49 | H | H | Na | 45 | H | $CH_3$ | $\overset{O}{\overset{\|}{C}}-OCH_2CH_2O$ | Na | Na/H | 40 | H | $CH_2COOH$ | COOH | 15 | 0,55 | 0,3 | 68 | 15 | 720 | 510 |
| 50 | H | H | Na | 45 | H | $CH_3$ | $\overset{O}{\overset{\|}{C}}-OCH_2CH_2O$ | Na | Na/H | 40 | H | $-CH_3$ | 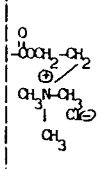 | 15 | 0,48 | 0,2 | 68 | 15 | 690 | 450 |
| 51 | H | H | Na | 45 | H | $CH_3$ | $\overset{O}{\overset{\|}{C}}-OCH_2CH_2O$ | Na | Na/H | 40 | H | H | $C_6H_5$ | 15 | 0,7 | 0,1 | 68 | 15 | 850 | 540 |
| 52 | H | H | Na | 45 | H | $CH_3$ | - | Na | Na/H | 40 | H | $CH_3$ | $\underset{O}{\underset{\|}{C}}-OCH_3$ | 15 | 0,65 | 0,1 | 68 | 15 | 750 | 520 |
| 53 | H | H | Na | 45 | H | $CH_3$ | $\overset{O}{\overset{\|}{C}}-O(CH_2CH_2O)_3$ | Na | Na/H | 40 | H | $CH_3$ | $\underset{O}{\underset{\|}{C}}-OCH_3$ | 15 | 0,7 | 0,4 | 68 | 15 | 910 | 670 |
| 54 | H | H | Na | 45 | H | H | $-CH_2O-$ | Na | Na/H | 40 | H | $CH_3$ | $\underset{O}{\underset{\|}{C}}-OCH_3$ | 15 | 0,8 | 0,4 | 68 | 15 | 860 | 590 |
| 55 | H | H | Na | 45 | H | $C_6H_5$ | - | Na | Na/H | 40 | H | $CH_3$ | $\underset{O}{\underset{\|}{C}}-OCH_3$ | 15 | Insoluble | 0,3 | 68 | 15 | 780 | 460 |
| 56 | H | H | Na | 45 | H | H | 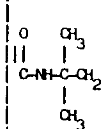 | Na | Na/H | 40 | H | $CH_3$ | $\underset{O}{\underset{\|}{C}}-OCH_3$ | 15 | 0,68 | 0,4 | 68 | 15 | 990 | 600 |
| 57 | H | H | Na | 55 | $\overset{O}{\overset{\|}{C}}-OH$ | H | 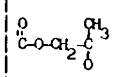 | Na | Na/H | 30 | H | $CH_3$ | $\underset{O}{\underset{\|}{C}}-OCH_3$ | 15 | 0,50 | 0,4 | 68 | 15 | 850 | 540 |
| 58 | $\overset{O}{\overset{\|}{C}}-OH$ | H | Na | 45 | H | $CH_3$ | $\overset{O}{\overset{\|}{C}}-OCH_2CH_2O$ | Na | Na/H | 40 | H | $CH_3$ | $\underset{O}{\underset{\|}{C}}-OCH_3$ | 15 | 0,75 | 0,3 | 68 | 15 | 930 | 625 |
| 59 | H | H | Na | 45 | H | $CH_3$ | $\overset{O}{\overset{\|}{C}}-OCH_2CH_2O$ | Na | Na/H | 40 | H | H | 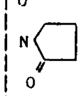 | 15 | 0,5 | 0,3 | 68 | 15 | 720 | 440 |
| 60 | H | H | Na | 45 | H | $CH_3$ | $\overset{O}{\overset{\|}{C}}-OCH_2CH_2O$ | Na | Na/H | 40 | $\overset{O}{\overset{\|}{C}}-OH$ | H | $\overset{O}{\overset{\|}{C}}-OCH_3$ | 15 | 0,58 | 0,6 | 68 | 15 | 970 | 640 |

De ces tableaux et par comparaison avec le Tableau I, il apparaît que les viscosités des suspensions selon l'invention mesurées dans les mêmes conditions que celles de l'exemple 1 sont notablement plus faibles que dans l'art connu. De ce fait, il a été possible d'abaisser la concentration en agent de compatibilité dans des proportions importantes pouvant se situer dans un rapport de 10/1.

Exemple 5

Cet exemple, destiné à illustrer l'objet de l'invention, concerne le délitage du même sulfate de calcium hydraté (déjà mis en oeuvre dans les exemples précédents) en présence de l'agent selon l'invention, copolymère de formule décrite dans l'exemple 4 et de viscosité spécifique variant de 0,27 à 2,5 et salifiés par le cation sodium.

Dans ce cas, plusieurs essais ont été effectués (essais 40/01 à 40/10), les suspensions aqueuses de sulfate de calcium hydraté soumises au délitage en présence dudit agent à raison de 0,1% en poids de matière sèche par rapport au poids du pigment sec, la concentration de la suspension étant toujours fixée à 68% en poids dudit sulfate.

Toutes les caractéristiques des suspensions préparées (essais 40/01 à 40/10) et des résultats obtenus ont été rassemblés dans le Tableau V ci-après.

TABLEAU V

| Influence de la viscosité spécifique de l'agent sur la rhéologie de la suspension pigmentaire | | | |
|---|---|---|---|
| N° de l'essai | Viscosité spécifique | Viscosité Brookfield après 24 heures (en cP) | |
| | | 10 T/mn | 100 T/mn |
| 40/01 | 0,27 | 1 330 | 910 |
| 40/02 | 0,45 | 850 | 520 |
| 40/03 | 0,5 | 840 | 485 |
| 40/04 | 0,54 | 710 | 450 |
| 40/05 | 0,6 | 700 | 410 |
| 40/06 | 0,7 | 650 | 370 |
| 40/07 | 0,76 | 630 | 340 |
| 40/08 | 0,9 | 750 | 460 |
| 40/09 | 1,17 | 900 | 540 |
| 40/10 | 2,5 | 1250 | 830 |

De ce tableau et par comparaison avec le Tableau I, il apparaît que les viscosités des suspensions selon l'invention mesurées dans les mêmes conditions que celles de l'exemple 1 sont notablement plus faibles que dans l'art connu, même dans les limites revendiquées des viscosités spécifiques.

De ce fait, il a été possible d'abaisser dans tous les cas la concentration en agent de compatibilité dans un rapport de 10/1.

Exemple 6

Cet exemple, destiné à illustrer l'objet de l'invention, concerne le délitage du même sulfate de calcium hydraté (déjà mis en oeuvre dans les exemples précédents) en présence de l'agent constitué par un copolymère de même viscosité spécifique et de même composition mais salifié par les ions sodium, lithium, ammonium, potassium, calcium, magnésium, ou sous une forme acide, ou encore salifié par une amine.

Dans ce cas, plusieurs essais ont été effectués (essais 61 à 69), les suspensions aqueuses soumises au délitage en présence dudit agent ayant des concentrations en matière sèche fixées à 68% en poids et le taux de l'agent étant fixé à 0,1% en poids de matière sèche.

Toutes les caractéristiques des suspensions préparées (essais 61 à 69) et des résultats obtenus ont été rassemblés dans le Tableau VI ci-après.

TABLEAU VI

Influence de l'agent de neutralisation

| N° de l'essai | A: R1 | A: R2 | A: M1 | A: k | B: R3 | B: R4 | B: R5 | B: R6 | B: M2 | B: l | C: R7 | C: R8 | C: R9 | C: m | Viscosité spécifique | Pourcentage d'agent | Concentration de la suspension (%) | Diamètre moyen des particules (micromètres) | Viscosité Brookfield après 24 H (en cP) 10 T/mn | Viscosité Brookfield après 24 H (en cP) 100 T/mn |
|---|---|---|---|---|---|---|---|---|---|---|---|---|---|---|---|---|---|---|---|---|
| 61 | H | H | Na | 45 | H | $CH_3$ | $\overset{O}{\overset{\|}{C}}-OCH_2CH_2O$ | Na | Na/H | 40 | H | $CH_3$ | $\overset{O}{\overset{\|}{C}}-OCH_3$ | 15 | 0,54 | 0,1 | 68 | 15 | 710 | 450 |
| 62 | H | H | $NH_4$ | 45 | H | $CH_3$ | $\overset{O}{\overset{\|}{C}}-OCH_2CH_2O$ | $NH_4$ | $NH_4$/H | 40 | H | $CH_3$ | $\overset{O}{\overset{\|}{C}}-OCH_3$ | 15 | 0,54 | 0,1 | 68 | 15 | 820 | 490 |
| 63 | H | H | K | 45 | H | $CH_3$ | $\overset{O}{\overset{\|}{C}}-OCH_2CH_2O$ | K | K/H | 40 | H | $CH_3$ | $\overset{O}{\overset{\|}{C}}-OCH_3$ | 15 | 0,54 | 0,1 | 68 | 15 | 1200 | 790 |
| 64 | H | H | Li | 45 | H | $CH_3$ | $\overset{O}{\overset{\|}{C}}-OCH_2CH_2O$ | Li | Li/H | 40 | H | $CH_3$ | $\overset{O}{\overset{\|}{C}}-OCH_3$ | 15 | 0,54 | 0,1 | 68 | 15 | 650 | 400 |
| 65 | H | H | Ca | 45 | H | $CH_3$ | $\overset{O}{\overset{\|}{C}}-OCH_2CH_2O$ | Ca | Ca/H | 40 | H | $CH_3$ | $\overset{O}{\overset{\|}{C}}-OCH_3$ | 15 | 0,54 | 0,1 | 68 | 15 | 1800 | 950 |
| 66 | H | H | Na/Mg | 45 | H | $CH_3$ | $\overset{O}{\overset{\|}{C}}-OCH_2CH_2O$ | Na/ Mg | Na/ Mg/H | 40 | H | $CH_3$ | $\overset{O}{\overset{\|}{C}}-OCH_3$ | 15 | 0,54 | 0,1 | 68 | 15 | 1600 | 920 |
| 67 | H | H | TEA | 45 | H | $CH_3$ | $\overset{O}{\overset{\|}{C}}-OCH_2CH_2O$ | TEA | TEA/H | 40 | H | $CH_3$ | $\overset{O}{\overset{\|}{C}}-OCH_3$ | 15 | 0,54 | 0,1 | 68 | 15 | 1560 | 880 |
| 68 | H | H | H | 45 | H | $CH_3$ | $\overset{O}{\overset{\|}{C}}-OCH_2CH_2O$ | H | H | 40 | H | $CH_3$ | $\overset{O}{\overset{\|}{C}}-OCH_3$ | 15 | 0,54 | 0,1 | 68 | 15 | 1100 | 720 |
| 69 | H | H | Na | 45 | H | $CH_3$ | $\overset{O}{\overset{\|}{C}}-OCH_2CH_2O$ | Na | Na | 40 | H | $CH_3$ | $\overset{O}{\overset{\|}{C}}-OCH_3$ | 15 | 0,54 | 0,1 | 68 | 15 | 700 | 430 |

De ce tableau et par comparaison avec le Tableau I, il apparaît que les viscosités des suspensions selon l'invention sont notablement plus faibles que dans l'art connu, bien que la concentration en agent de compatibilité ait été diminuée dans un rapport de 10/1.

Exemple 7

Cet exemple a pour but d'illustrer comparativement la compatibilité de suspensions aqueuses polypigmentaires comprenant deux pigments, dont l'un au moins est du sulfate de calcium hydraté, pour l'enduction du papier, mettant en oeuvre un agent de compatibilité selon l'art antérieur (Tableau VII-2, essais 70 à 79) et selon l'invention (Tableau VII-2, essais 80 à 88).

Pour ce faire, on a d'abord réalisé la préparation par délitage de suspensions aqueuses monopigmentaires de carbonate de calcium, de sulfate de calcium hydraté, de kaolin et d'oxyde de titane, en présence d'un agent de compatibilité selon l'art antérieur (types A, $B_1$, C et D) et selon l'invention (type $B_2$) de viscosités spécifiques proches.

Les caractéristiques des suspensions aqueuses pigmentaires ainsi préparées et les résultats obtenus ont été rassemblés dans le Tableau VII-1 ci-après, mentionnant en particulier les viscosités des suspensions à 10 et 100 tours par minute.

TABLEAU VII - 1

**Caractéristiques des suspensions utilisées dans le Tableau VII - 2**

| Suspension de : | | Agent : Type | Agent : % | Suspension : Concentration (%) | Suspension : Diamètre médian (microns) | Viscosité Brookfield (cP) : 10 T/mn | Viscosité Brookfield (cP) : 100 T/mn |
|---|---|---|---|---|---|---|---|
| $CaCO_3$ H 90 de la société OMYA | A | Polyacrylate de sodium Viscosité spécifique : 0,55 | 0,4 | 75 | 1 | 700 | 300 |
| $SO_4Ca,2H_2O$ | B1 | Polyacrylate Viscosité spécifique : 0,6 | 1 | 70 | 15 | 2 700 | 980 |
| | B2 | Agent de l'Invention Essai 40/07 | 1 | 70 | 15 | 200 | 150 |
| Kaolin SPS de ECC | C | Polyacrylate de sodium Viscosité spécifique : 0,40 | 0,2 | 66 | 3,5 | 600 | 300 |
| Titane AT1 de THANN ET MULHOUSE | D | Polyacrylate de sodium et de calcium Viscosité spécifique : 0,4 | 0,35 | 73 | 0,5 | 6 600 | 1 200 |

Les mélanges des suspensions ont été réalisés en ajustant les teneurs en agent à 1 % :

. pour l'Art Antérieur avec un polyacrylate de sodium de viscosité spécifique 0,55
. pour l'Invention avec le 40/07.

Puis, pour tester par comparaison l'efficacité des agents de compatibilité mis en oeuvre, on a réalisé la préparation de suspensions aqueuses polypigmentaires par mélange des suspensions de carbonate de calcium, de kaolin et d'oxyde de titane précitées avec les suspensions de sulfate de calcium hydraté, en formant les suspensions mixtes relatives à l'art antérieur (essais 70 à 79) et relatives à l'invention (essais 80 à 88).

Les caractéristiques des suspensions polypigmentaires ainsi préparées et les résultats expérimentaux obtenus ont été rassemblés dans le Tableau VII-2 ci-après.

TABLEAU VII - 2

Essai de compatibilité par mélange

| | N° de l'essai | Extrait sec (%) | % en poids du mélange de suspensions | | | | | Viscosité Brookfield du mélange (en cP) | |
|---|---|---|---|---|---|---|---|---|---|
| | | | de $CaCO_3$ | de $CaSO_4,2H_2O$ | | d'oxyde de titane | de kaolin | | |
| | | | A | B2 | B1 | D | C | 10 T/mn | 100 T/mn |
| ART ANTERIEUR | 70 | 74,5 | 90 | | 10 | 0 | 0 | Prise en masse | |
| | 71 | 74 | 80 | | 20 | 0 | 0 | " | " |
| | 72 | 73,5 | 70 | | 30 | 0 | 0 | 48 000 | 7 200 |
| | 73 | 66,4 | 0 | | 10 | 0 | 90 | Prise en masse | |
| | 74 | 66,8 | 0 | | 20 | 0 | 80 | " | " |
| | 75 | 67,2 | 0 | | 30 | 0 | 70 | " | " |
| | 76 | 67,6 | 0 | | 40 | 0 | 60 | 100 000 | 10 000 |
| | 77 | 68 | 0 | | 50 | 0 | 50 | 75 000 | 10 000 |
| | 78 | 72,7 | 0 | | 10 | 90 | 0 | Prise en masse | |
| | 79 | 72,4 | 0 | | 20 | 80 | 0 | Prise en masse | |
| INVENTION | 80 | 66,4 | 0 | 10 | | 0 | 90 | 33 000 | 5 200 |
| | 81 | 66,8 | 0 | 20 | | 0 | 80 | 16 000 | 3 500 |
| | 82 | 67,2 | 0 | 30 | | 0 | 70 | 6 200 | 1 300 |
| | 83 | 74,5 | 90 | 10 | | 0 | 0 | 35 000 | 4 000 |
| | 84 | 74 | 80 | 20 | | 0 | 0 | 22 000 | 2 840 |
| | 85 | 73,5 | 70 | 30 | | 0 | 0 | 14 000 | 2 000 |
| | 86 | 72,7 | 0 | 10 | | 90 | 0 | 6 250 | 815 |
| | 87 | 72,4 | 0 | 20 | | 80 | 0 | 2 700 | 460 |
| | 88 | 72,1 | 0 | 30 | | 70 | 0 | 1 600 | 295 |

Le Tableau VII-2 conduit aux observations suivantes :

- Le sulfate de calcium hydraté, du fait de sa plus forte solubilité dans le milieu aqueux, est le pigment générateur de l'effet de choc lors de la préparation des suspensions polypigmentaires. Or, il faut rappeler que pour le couchage du papier, ce sont les suspensions polypigmentaires à faible teneur en sulfate de calcium hydraté qui sont mises en oeuvre et qui se révèlent être les plus sensibles à l'effet de choc.
- Pour les essais 70 à 79 qui constituent l'art antérieur auquel l'invention est comparée, les suspensions polypigmentaires obtenues par mélange manifestent pratiquement toutes une prise en masse lors du mélange des suspensions constitutives. Ce phénomène manifeste l'incapacité pour l'agent de compatibilité de l'art antérieur à annihiler l'effet de choc provoqué par le sulfate de calcium hydraté.
- Pour les essais 80 à 88 qui constituent l'illustration de l'invention, les suspensions polypigmentaires obtenues par mélange présentent toutes une viscosité raisonnablement diminuée, les rendant manipulables pour le couchage du papier. Le phénomène constaté de l'abaissement substantiel des viscosités manifeste la capacité pour l'agent de compatibilité selon l'invention à annihiler l'effet de choc provoqué par le sulfate de calcium hydraté. Ainsi, l'agent de compatibilité selon l'invention a permis de préparer des suspensions polypigmentaires contenant du sulfate de calcium hydraté, ayant des concentrations en matière sèche adéquates aux applications papetières.

Tous les résultats précités ont été rendus comparables grâce à des extraits secs, des pourcentages d'agent de compatibilité et des taux de mélanges pigmentaires identiques entre l'art antérieur et l'invention.

Exemple 8

Cet exemple a pour objet d'illustrer, d'une manière comparative, la capacité pour l'agent selon l'invention d'être simultanément agent de compatibilité, de dispersion et de broyage.

Dans ce but, des suspensions de sulfate de calcium hydraté grossier de même origine ont été préparées en mettant en oeuvre des agents de compatibilité de l'art antérieur (essais 89 à 92) et des agents de compatibilité de l'invention (essais 93 à 98).

Agents de compatibilité de l'art antérieur :

Essai 89 : polyacrylate de sodium
Essai 90 : polyméthacrylate de sodium
Essai 91 : copolymère d'acide acrylique et de métha-allyle sulfonate neutralisé par l'ion sodium
Essai 92 : copolymère d'acide acrylique et de méthacrylate diméthylaminoéthyl neutralisé par l'ion sodium

Agents de compatibilité de l'invention :

Essai 93 : copolymère d'acide acrylique et de phosphate de méthacrylate d'éthylène glycol neutralisé par l'ion sodium
Essai 94 : copolymère de méthacrylate de méthyle, de phosphate de méthacrylate d'éthylène glycol et d'acide acrylique neutralisé par l'ion sodium
Essai 95 : copolymère de phosphate de méthacrylate d'éthylène glycol, de phosphate d'acrylate d'éthylène glycol et d'acide acrylique neutralisé par l'ion sodium
Essai 96 : copolymère de phosphate de méthacrylate d'éthylène glycol, de phosphate d'acrylate d'éthylène glycol et de méthacrylate de méthyle neutralisé par l'ion sodium
Essai 97 : copolymère de phosphate de méthacrylate d'éthylène glycol, d'acide acrylique et d'acrylamide neutralisé par l'ion sodium
Essai 98 : copolymère de méthacrylate de méthyle, de phosphate de méthacrylate d'éthylène glycol et d'acide acrylique neutralisé par l'ion lithium

Le diamètre médian du sulfate de calcium hydraté avant le broyage était de 15 micromètres.

Ces essais ont été exécutés selon les mêmes critères expérimentaux en effectuant le broyage dans le même appareillage afin que les résultats obtenus puissent être comparés.

Pour chaque essai, on a préparé une suspension aqueuse de sulfate de calcium hydraté, ayant un diamètre médian de 15 micromètres.

La suspension aqueuse avait une concentration de 68% en matière sèche exprimée en pour cent en poids.

L'agent de broyage était présent dans les suspensions à raison de 1% en poids de matière sèche par rapport à la masse de sulfate de calcium hydraté à broyer.

Chaque suspension ainsi préparée a été placée dans un broyeur du type Dyno-Mill à cylindre fixe et impulseur tournant, dont le corps broyant était constitué par des billes de corindon de diamètre compris dans l'intervalle 0,6 millimètre à 1,0 millimètre.

Le volume total occupé par le corps broyant était de 5 000 millilitres tandis que sa masse était de 10 kilogrammes.

La chambre de broyage avait un volume de 5 000 millilitres.

La vitesse circonférentielle du broyeur était de 10 mètres par seconde.

La suspension de sulfate de calcium hydraté était recyclée à raison de 50 litres par heure.

La sortie du broyeur Dyno-Mill était munie d'un séparateur de mailles 300 microns, permettant de séparer la suspension résultant du broyage et le corps broyant.

La température lors de chaque essai de broyage était maintenue à 25 ° C.

A la fin du broyage, la viscosité de la suspension microparticulaire était mesurée à l'aide d'un viscosimètre Brookfield, à une température de 20 ° C et aux vitesses de rotation de 10 et 100 tours par minute.

De même, à la fin du broyage, la granulométrie était déterminée par l'intermédiaire du granulomètre à laser 715 de la société CILAS ALCATEL.

Toutes les caractéristiques des suspensions broyées et les résultats obtenus après broyage ont été réunis dans le Tableau VIII ci-après :

TABLEAU VIII

Broyage du $CaSO_4$, $2H_2O$

| | N° de l'essai | Composition de l'agent | Viscosité spécifique | Granulométrie Diamètre médian (en microns) | Viscosité Brookfield (en cP) 10 T/mn | 100 T/mn |
|---|---|---|---|---|---|---|
| ART ANTERIEUR | 89 | 100 % AA neutralisé 100% Na | 0,55 | 8 | 17 000 | 2 700 |
| | 90 | 100 % AMA " " | 0,5 | 9 | 18 000 | 3 980 |
| | 91 | 85 % AA<br>15 % MTAS " " | 0,4 | 9 | 12 500 | 2 300 |
| | 92 | 50 % AA<br>50 % MADAM " " | 0,4 | 8 | 16 500 | 2 600 |
| INVENTION | 93 | 70 % AA<br>30 % $PO_4$MAEG " " | 0,76 | 5 | 6 000 | 1 000 |
| | 94 | 15 % MAM<br>40 % $PO_4$ MAEG<br>45 % AA " " | 0,76 | 3 | 7 500 | 1 120 |
| | 95 | 40 % $PO_4$ MAEG<br>40 % $PO_4$ AEG<br>20 % AA " " | 0,6 | 4 | 10 000 | 1 480 |
| | 96 | 40 % $PO_4$ MAEG<br>40 % $PO_4$ AEG<br>20 % MAM " " | 0,74 | 5 | 9 500 | 1 300 |
| | 97 | 40 % $PO_4$ MAEG<br>45 % AA<br>15 % Acrylamide " " | 0,62 | 4 | 7 800 | 1 100 |
| | 98 | 15 % MAM<br>40 $PO_4$MAEG<br>45 % AA<br>Neutralisé 100% Li | 0,76 | 3 | 7 000 | 950 |

Ce tableau conduit aux observations suivantes :

- Pour les essais 89 à 92 qui concernent les suspensions de sulfate de calcium hydraté broyé en présence de l'agent de compatibilité selon l'art antérieur, on constate que le diamètre médian du pigment broyé reste grossier et que la viscosité des suspensions obtenues est élevée, les deux caractéristiques étant mal adaptées aux applications papetières.
- Pour les essais 93 à 98 qui concernent les suspensions de sulfate de calcium hydraté broyé en présence de l'agent de compatibilité selon l'invention, on observe qui le diamètre médian du pigment broyé est très affiné et que la viscosité des suspensions obtenus est beaucoup plus faible que dans l'art antérieur, malgré la diminution conséquente du diamètre médian.

L'évolution favorable de ces deux caractéristiques rend les suspensions particulièrement adaptées aux applications papetières.

Exemple 9

Cet exemple a pour objet d'illustrer la capacité pour l'agent de compatibilité selon l'invention de permettre le broyage de suspensions aqueuses polypigmentaires comprenant en mélange pigmentaire du sulfate de calcium hydraté et du carbonate de calcium.

Pour cela, des suspensions mixtes de sulfate de calcium hydraté grossier (diamètre médian de 15 micromètres) et de carbonate de calcium grossier (diamètre médian de 30 micromètres) ont été préparées en mettant en oeuvre un agent de compatibilité selon l'art antérieur (essais 99 à 101) et un agent de compatibilité selon l'invention (essais 102 à 104).

Chaque suspension aqueuse avait une concentration de 70% en poids de matière sèche, la composition du mélange pigmentaire étant réalisée selon les rapports indiqués dans le Tableau IX, l'agent de compatibilité étant présent à raison de 1% en poids de matière sèche par rapport aux pigments secs.

Les essais de broyage ont été exécutés selon les mêmes critères expérimentaux que ceux décrits dans l'exemple 8.

Toutes les caractéristiques des suspensions broyées et les résultats obtenus après broyage ont été réunis dans le Tableau IX ci-après.

TABLEAU IX

COBROYAGE $CaSO_4\ 2H_2O$ $CaCO_3$

| | Numéro de l'essai | Type d'agent | Pourcentage d'agent | Diamètre médian après broyage | $CaSO_4\ 2H_2O$ | $CaCO_3$ | Viscosité après broyage 10 T | Viscosité après broyage 100 T |
|---|---|---|---|---|---|---|---|---|
| ART ANTERIEUR | 99 | Polyacrylate de sodium | 1 | BROYAGE IMPOSSIBLE | 70 | 30 | BROYAGE IMPOSSIBLE | |
| | 100 | Viscosité Spécifique : 0,55 | 1 | | 50 | 50 | | |
| | 101 | | 1 | | 30 | 70 | | |
| INVENTION | 102 | AGENT DE L'INVENTION ESSAI 40-07 | 1 | 1,3 | 70 | 30 | 14 000 | 1 320 |
| | 103 | | 1 | 1,4 | 50 | 50 | 14 000 | 1 600 |
| | 104 | | 1 | 1,5 | 30 | 70 | 6 000 | 1 160 |

Ce tableau conduit aux observations suivantes :

- Pour les essais 99 à 101 qui concernent les suspensions aqueuses polypigmentaires de l'art antérieur, le broyage s'est révélé impossible en raison de l'augmentation rapide de la viscosité jusqu'à atteindre un état pâteux.

- Pour les essais 102 à 104 qui concernent les suspensions aqueuses polypigmentaires selon l'invention, on constate que le diamètre médian des deux types de pigments broyés est très proche du micromètre, manifestant à travers ce caractère, non seulement une amélioration remarquable par rapport aux suspensions pigmentaires de l'art antérieur, mais encore par rapport aux suspensions monopigmentaires broyées de l'exemple 8. En outre, les viscosités après broyage desdites suspensions restent raisonnables, voire faibles, malgré la finesse accrue des pigments cobroyés.

Exemple 10

Cet exemple a pour but d'illustrer la compatibilité entre des pigments différents par leur composition quand ils interviennent simultanément dans une suspension aqueuse polypigmentaire grâce à la présence de l'agent selon l'invention.

Pour ce faire, on a d'abord effectué la préparation par broyage en milieu aqueux (selon les critères de l'exemple 8) de suspensions monopigmentaires de carbonate de calcium et de sulfate de calcium hydraté en présence d'un agent de compatibilité selon l'art antérieur (suspensions types E et G) et selon l'invention (suspensions types F et H). Toutes les caractéristiques des suspensions monopigmentaires et les résultats obtenus sont regroupés dans la Tableau X-1 ci-après.

TABLEAU X - 1

Caractéristiques des suspensions du Tableau X - 2

| | Suspension de $CaCO_3$ | | Suspension de $CaSO_4$, $2H_2O$ | |
|---|---|---|---|---|
| Référence | E | F | G | H |
| Type d'agent | Polyacrylate de sodium | Agent de l'invention. Essai 40/07 | Polyacrylate de sodium | Agent de l'invention. Essai 40/07 |
| Viscosité spécifique | 0,55 | 0,76 | 0,55 | 0,76 |
| Concentration de la suspension (%) | 75 | 75 | 68 | 68 |
| Diamètre médian (microns) | 1 | 1,5 | 8 | 3 |
| Viscosité Brookfield des suspensions (cP) 10 T/mn | 700 | 3 000 | 17 000 | 7 500 |
| Viscosité Brookfield des suspensions (cP) 100 T/mn | 300 | 1 200 | 2 700 | 1 170 |

Puis, pour tester par comparaison l'efficacité des agents de compatibilité mis en oeuvre, on a réalisé la préparation de suspensions aqueuses polypigmentaires par mélange des suspensions de carbonate de calcium et de sulfate de calcium hydraté, contenant d'une part l'agent de compatibilité selon l'art antérieur et d'autre part l'agent de compatibilité selon l'invention.

Les suspensions polypigmentaires (essais 105 à 108) sont relatives à l'art antérieur, les suspension polypigmentaires (essais 109 à 112) concernent l'objet de l'invention.

Les caractéristiques des suspensions polypigmentaires préparées et les résultats expérimentaux obtenus ont été réunis dans le Tableau X-2 ci-après.

**TABLEAU X - 2**

| | N° de l'essai | Extrait sec du mélange (%) | % en poids du mélange de suspensions: $CaCO_3$ E | $CaCO_3$ F | $CaSO_4,2H_2O$ G | $CaSO_4,2H_2O$ H | Viscosité Brookfield (en cP) 10 T/mn | Viscosité Brookfield (en cP) 100 T/mn |
|---|---|---|---|---|---|---|---|---|
| ART ANTERIEUR | 105 | 74,3 | 90 | 0 | 10 | 0 | 75 000 | > 10 000 |
| | 106 | 73,6 | 80 | 0 | 20 | 0 | 62 000 | > 10 000 |
| | 107 | 72,9 | 70 | 0 | 30 | 0 | 45 000 | > 10 000 |
| | 108 | 72,2 | 60 | 0 | 40 | 0 | 37 000 | 8 000 |
| INVENTION | 109 | 74,3 | 0 | 90 | 0 | 10 | 3 000 | 740 |
| | 110 | 73,6 | 0 | 80 | 0 | 20 | 1 600 | 360 |
| | 111 | 72,9 | 0 | 70 | 0 | 30 | 400 | 230 |
| | 112 | 72,2 | 0 | 60 | 0 | 40 | 280 | 200 |

Le Tableau X-2 conduit aux observations suivantes :

- Pour les essais 105 à 108, l'agent de compatibilité de l'art antérieur n'annihile pas l'effet de choc interpigmentaire lors du mélange des suspensions monopigmentaires : les viscosités des suspensions polypigmentaires relatives à l'art antérieur sont exacerbées à l'extrême avec apparition d'un aspect pâteux.
- Pour les essais 109 à 112, l'agent de compatibilité selon l'invention annihile l'effet de choc interpigmentaire lors du mélange des suspensions monopigmentaires : les viscosités desdites suspensions polypigmentaires sont très faibles, voire plus faibles que celles observées dans le Tableau VII-2 de l'exemple 7 (suspensions polypigmentaires obtenus par mélange de suspensions monopigmentaires non broyées).

Exemple 11

Cet exemple a pour objet d'illustrer, dans l'enduction du papier, la capacité du sulfate de calcium hydraté à se substituer en tant que pigment à l'oxyde de titane dans une suspension polypigmentaire, grâce à la présence de l'agent selon l'invention.

Pour ce faire, deux suspensions aqueuses polypigmentaires ont été préparées, l'une relative à l'art antérieur contenant du kaolin, du carbonate de calcium et de l'oxyde de titane dispersés dans la phase aqueuse à l'aide d'agents de compatibilité de l'art antérieur, l'autre relative à l'invention contenant du kaolin, du carbonate de calcium et du sulfate de calcium hydraté dispersés dans la phase aqueuse à l'aide de l'agent de compatibilité selon l'invention.

A ces suspensions aqueuses polypigmentaires ont été ajoutés les divers constituants nécessaires à leur transformation en formules de couchage du papier, lesdits constituants ayant été introduits selon des quantités identiques afin que ces deux formules se distinguent l'une de l'autre par la présence du $TiO_2$ dans l'une, et par la présence du sulfate de calcium hydraté et l'agent de compatibilité selon l'invention dans l'autre.

Ces deux formules ont été mises en oeuvre pour le couchage d'un carton sur une machine à table plate construite par la société ALLIMAND.

Au moyen d'une lame traînante (Trailing Blade), on a déposé sur un support carton (170 $g.m^{-2}$) une couche de 11 à 12 $g.m^{-2}$ de chaque formule à une vitesse d'application de 380 mètres par minute dans une laize de 3,2 mètres. A la sortie de la machine ALLIMAND, on a recueilli un carton couché de 181 à 182 $g.m^{-2}$.

Toutes les caractéristiques relatives aux formules de couchage et aux cartons couchés selon ces formules ont été réunies dans le Tableau XI ci-après.

TABLEAU XI

**Formules de couchage - Essai industriel**

| | | |
|---|---|---|
| Kaolin de la Société ECC | 65 | 65 |
| $CaCO_3$ Hydrocarb 90 de OMYA | 25 | 25 |
| $TiO_2$ RL 68 de Thann et Mulhouse | 10 | 0 |
| $CaSO_4$ ; $2H_2O$ | 0 | 10 |
| Agent de compatibilité de l'invention 40/07 : ajout | 0 | 4 % en sec/sec par rapport au sulfate |
| CMC Finnfix 5 (rétenteur d'eau) de Metralliiton Tilisuus | 0,5 % sur pigment sec | 0,5 % sur pigment sec |
| Latex styrène acrylique SD 215 de Rhône Poulenc | 15 % | 15 % |
| Urecoll S (insolubilisant de la couche) de BASF | 10 % par rapport au latex sec | 10 % par rapport au latex sec |
| NaOH q.s.p. pour un pH de : | 8,5 - 8,7 | 8,5 -8,7 |
| Eau q.s.p. pour un extrait sec de : | 65 % | 65 % |
| Leucophor CK azurant de Sandoz | 1 % en l'état sur pigment sec | 1 % en l'état sur pigment sec |
| Viscosité Brookfield 10 T<br>100 T | 7600<br>1280 | 6000<br>1000 |
| Blancheur | 84,5 | 89,7 |
| Brillance sous ultraviolet | 29 | 27 |
| Opacité indice de pause | - 0,8 | - 8,65 |
| Absorption d'encre - Temps de séchage | 12/15 secondes | 4/5 secondes |
| Comportement sur la machine | Léger encrassement de lame | Lame parfaitement lisse |

Ce dernier tableau révèle que la formule de couchage selon l'invention offre un comportement amélioré sur machine et un carton couché pour lequel la blancheur, l'opacité et le temps de séchage de l'encre sont également améliorés.

## Revendications

### Revendications pour les Etats contractants suivants : AT, BE, DE, GB, IT, NL, SE

**1.** Utilisation d'un copolymère de formule générale :

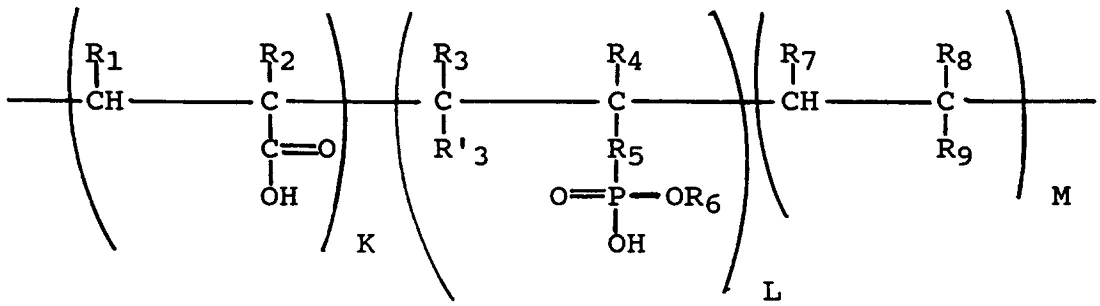

symbolisé par la formule :

$$-(A)_K-(B)_L-(C)_M-$$

dans laquelle le momomère éthylénique (B) possède une fonction phosphatée ou phosphonée, le monomère (A) est un monomère éthylénique à fonction carboxylique et le monomère (C) est un monomère éthylénique du type esters ou substitués, et dans laquelle L prend une valeur comprise entre 5 et 95 parties en poids avec K + L + M = 100 parties en poids, K et M pouvant séparément prendre la valeur 0, et dans laquelle :

- $R_1$ est l'hydrogène, une fonction carboxylique ou une fonction carboxylique estérifiée par un alcool en $C_1$ à $C_{12}$ préférentiellement par un alcool en $C_1$ à $C_3$,
- $R_2$ est l'hydrogène ou un alkyl en $C_1$ à $C_{12}$ préférentiellement en $C_1$ à $C_3$,
- $R_3$ et $R'_3$ sont l'hydrogène, une fonction carboxylique, un halogène, un alkyle en $C_1$ à $C_{12}$ de préférence en $C_1$ à $C_3$, un aryle substitué ou non,
- $R_4$ est l'hydrogène, un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est :

  a) dans le cas d'une fonction phosphate,

  - soit un ester carboxylique d'oxyde d'éthylène ou d'oxyde de propylène répondant à la formule :

    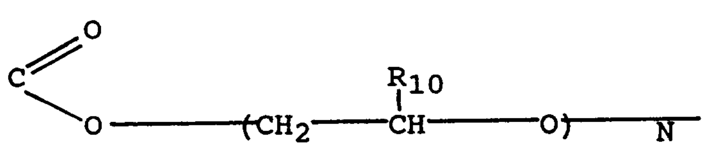

    dans laquelle $R_{10}$ peut être l'hydrogène ou un groupement méthyle et N peut prendre des valeurs de l'intervalle 1 à 50 et de préférence 1 à 10,
  - soit un ester carboxylique d'alkyle, d'aryle ou d'alkaryle de formule :

    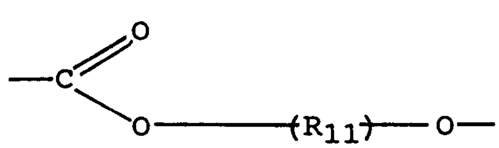

    dans laquelle $R_{11}$ peut prendre les valeurs $C_1$ à $C_{12}$,

- soit un amide substitué de formule :

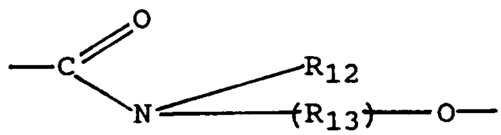

dans laquelle $R_{12}$ est l'hydrogène ou un alkyle en $C_1$ à $C_{12}$ et de préférence de $C_1$ à $C_3$, un aryle en $C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,
- soit de l'oxygène.

b) dans le cas d'une fonction phosphonate :
- soit un alkyle en $C_1$ à $C_{12}$ et de préférence de $C_1$ à $C_3$,
- soit un aryle en $C_5$ ou $C_6$ substitué ou non,
- soit un alkaryle,
- soit un ester en $C_1$ à $C_{12}$ et de préférence en $C_1$ à $C_3$,
- soit un amide substitué,

- $R_6$ est l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$et de préférence en $C_1$ à $C_3$, un aryle en $C_5$ ou $C_6$, un alkaryle,
- $R_8$ est l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté,

comme agent de compatibilité, de dispersion et de broyage mis en oeuvre au cours d'opérations de dispersion et de broyage de suspensions aqueuses pigmentaires formulées à partir d'un mélange de pigments minéraux autres que des argiles gonflantes et dont l'un au moins est du sulfate de calcium hydraté.

**2.** Utilisation d'un copolymère selon la revendication 1 caractérisé en ce que ledit copolymère résulte de la copolymérisation selon les procédés connus, à pression atmosphérique ou sous pression, en présence d'initiateurs et des régulateurs appropriés, en milieu aqueux, alcoolique, hydroalcoolique, aromatique, aliphatique ou dans un solvant halogéné d'au moins deux monomères éthyléniques dont l'un, le monomère (B), possède une fonction phosphatée ou phosphonée.

**3.** Utilisation d'un copolymère selon les revendications 1 et 2 caractérisée en ce que le milieu de polymérisation est choisi dans le groupe constitué par l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptoproprionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

**4.** Utilisation d'un copolymère selon les revendications 1 à 3 caractérisée en ce que ledit copolymère a une viscosité spécifique comprise entre 0,2 et 10,0 et préférentiellement entre 0,25 et 5,0 et très préférentiellement entre 0,4 et 1,2.

**5.** Utilisation d'un copolymère selon les revendications 1 à 4 caractérisée en ce que ledit copolymère est mis en oeuvre sous forme acide.

**6.** Utilisation d'un copolymère selon les revendications 1 à 4 caractérisée en ce que ledit copolymère est au moins partiellement neutralisé par un agent de neutralisation disposant d'une fonction monovalente.

7. Utilisation d'un copolymère selon la revendication 6 caractérisée en ce que l'agent de neutralisation est choisi dans le groupe des métaux alcalins et assimilés et préférentiellement dans le groupe constitué par le lithium, le sodium, le potassium, l'ammonium ou l'amine éventuellement.

8. Utilisation d'un copolymère selon les revendications 6 ou 7 caractérisée en ce que l'agent de neutralisation monovalent est associé à un agent de neutralisation polyvalent.

9. Utilisation d'un copolymère selon la revendication 8 caractérisée en ce que l'agent de neutralisation polyvalent est choisi dans le groupe constitué par les alcalino-terreux ou assimilés, préférentiellement par le calcium, le magnésium.

10. Suspension aqueuse pigmentaire contenant au moins du sulfate de calcium hydraté caractérisée en ce qu'elle contient le copolymère tel que décrit dans les revendications 1 à 9 et caractérisée en ce qu'elle est réalisée selon les étapes suivantes :
a) on réalise sous agitation la préparation par délitage d'une suspension aqueuse de sulfate de calcium hydraté, seul ou en mélange, en introduisant d'abord tout ou partie de l'agent selon l'invention dans la phase aqueuse, puis le(s) pigment(s) de manière à obtenir une suspension fluide et souhaitablement homogène.
b) on introduit en continu la suspension préparée selon (a) dans une zone de broyage constituée par un broyeur à microéléments,
c) on maintient la température de la suspension au cours du broyage à un niveau inférieur à 100 °C et préférentiellement comprise entre la température ambiante et 80 °C,
d) on malaxe la suspension à broyer en présence des microéléments pendant le temps nécessaire à l'obtention de la granulométrie recherchée,
e) éventuellement, on introduit au cours du broyage en au moins une fois une fraction complémentaire de l'agent,
f) à la sortie du broyeur, on sépare en continu la suspension de $CaSO_4$, $2H_2O$ seul ou en mélange finement broyée d'avec les corps broyants et les particules refusées parce que trop grossières,
g) éventuellement, on introduit dans la suspension finement broyée au moins un agent modificateur de la rhéologie.

11. Suspension aqueuse pigmentaire selon la revendication 10, caractérisé en ce que le copolymère est introduit à raison de 0,05 à 4% en poids de matières actives par rapport au poids sec des matériaux minéraux, et préférentiellement à raison de 0,5 à 2,5%.

12. Suspension aqueuse pigmentaire selon les revendications 10 ou 11, caractérisé en ce qu'elle a une concentration en matière sèche d'au moins 65% en poids, préférentiellement comprise entre 70 et 80% en poids.

13. Applications des suspensions aqueuses pigmentaires par la mise en oeuvre de l'une quelconque des revendications 1 à 12 comme charge pigmentaire dans la fabrication du papier, de la peinture et des matières plastiques.

14. Agent de compatibilité, de dispersion et de broyage mis en oeuvre au cours d'opérations de dispersion et de broyage pour suspensions aqueuses pigmentaires formulées à partir d'un mélange de pigments minéraux, dont l'un au moins est du sulfate de calcium hydraté en vue d'annihiler l'effet viscosifiant provoqué par la présence dudit sulfate, caractérisé en ce que ledit agent est un copolymère de formule générale :

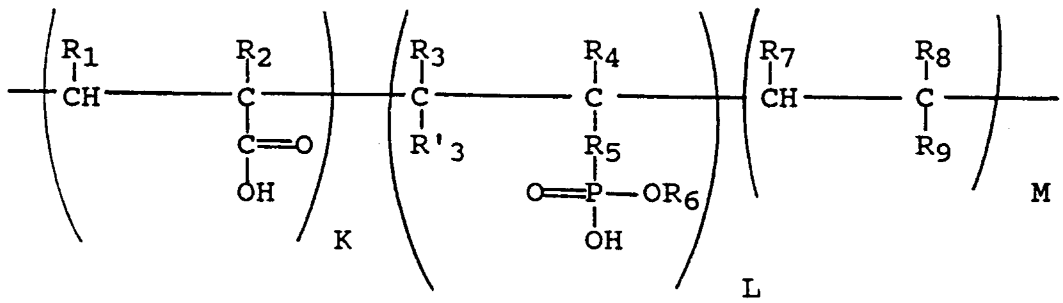

symbolisé par la formule : $-(A)_K-(B)_L-(C)_M-$
dans laquelle le momomère éthylénique (B) possède une fonction phosphatée ou phosphonée, le monomère (A) est un monomère éthylénique à fonction carboxylique et le monomère (C) est un monomère éthylénique du type esters ou substitués, et dans laquelle L prend une valeur comprise entre 5 et 95 parties en poids avec K + L + M = 100 parties en poids, K et M pouvant séparément prendre la valeur 0, et dans laquelle :

- $R_1$ est l'hydrogène, une fonction carboxylique ou une fonction carboxylique estérifiée par un alcool en $C_1$ à $C_{12}$ préférentiellement par un alcool en $C_1$ à $C_3$,
- $R_2$ est l'hydrogène ou un alkyl en $C_1$ à $C_{12}$ préférentiellement en $C_1$ à $C_3$,
- $R_3$ et $R'_3$ sont l'hydrogène, une fonction carboxylique, un halogène, un alkyle en $C_1$ à $C_{12}$ de préférence en $C_1$ à $C_3$, un aryle substitué ou non,
- $R_4$ est l'hydrogène, un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est :

  a) dans le cas d'une fonction phosphate :

  - soit un ester carboxylique d'oxyde d'éthylène ou d'oxyde de propylène répondant à la formule :

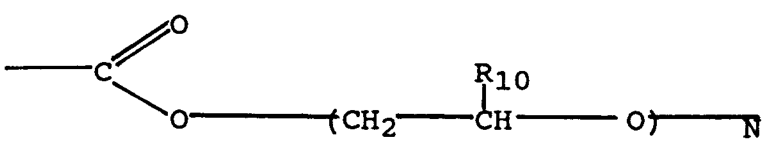

  dans laquelle $R_{10}$ peut être l'hydrogène ou un groupement méthyle et N peut prendre des valeurs de l'intervalle 1 à 50 et de préférence 1 à 10,

  - soit un ester carboxylique d'alkyle, d'aryle ou d'alkaryle de formule :

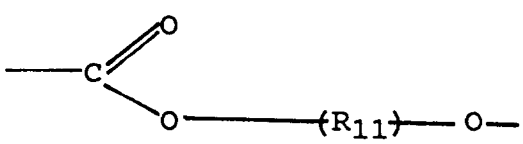

  dans laquelle $R_{11}$ peut prendre les valeurs $C_1$ à $C_{12}$,

  - soit un amide substitué de formule :

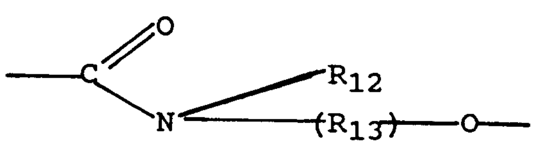

dans laquelle $R_{12}$ est l'hydrogène ou un alkyle en $C_1$ à $C_{12}$ et de préférence de $C_1$ à $C_3$, un aryle en $C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,

- soit de l'oxygène.

b) dans le cas d'une fonction phosphonate :

- soit un alkyle en $C_1$ à $C_{12}$ et de préférence de $C_1$ à $C_3$,
- soit un aryle en $C_5$ ou $C_6$ substitué ou non,
- soit un alkaryle,
- soit un ester en $C_1$ à $C_{12}$ et de préférence en $C_1$ à $C_3$,
- soit un amide substitué,

- $R_6$ est l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$ et de préférence en $C_1$ à $C_3$, un aryle en $C_5$ ou $C_6$, un alkaryle,
- $R_8$ est l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté,

à l'exclusion des radicaux :

$R_5$ =

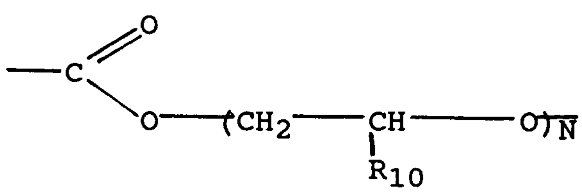

avec N = 1

ou $R_5$ =

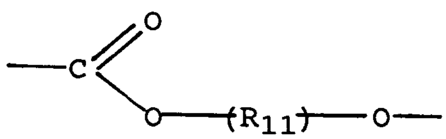

avec $R_{11}$ radical alkyle en $C_1$ à $C_8$

lorsque L prend une valeur comprise entre 5 et 8 parties en poids avec $R_3$ = H, $R'_3$ = H, $R_4$ = H ou un alkyle en $C_1$ à $C_8$.

- Ainsi qu'à l'exclusion des radicaux

$R_5$ =

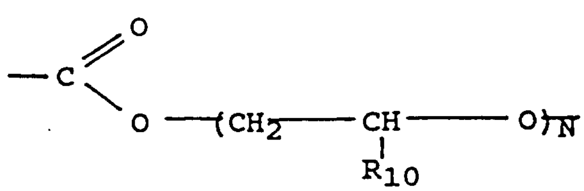

avec n = 1 à 30

ou

$R_5$ =

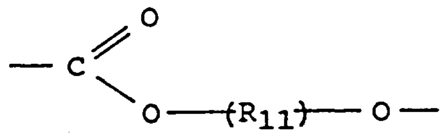

avec $R_{11}$ radical en $C_1$ à $C_{12}$
lorsque $R_1$ = H, $R_2$ = H ou alkyle en $C_1$ à $C_{12}$
$R_3$ = $R'_3$ = H, $R_4$ = H ou alkyle en $C_1$ à $C_{12}$,
$R_6$ = H, $R_7$ = H, $R_8$ = H ou alkyle en $C_1$ à $C_3$
et $R_9$ est un amide non substitué avec K et M
différents de 0.
ou bien lorsque $R_3$ = $R'_3$ = H, $R_4$ = H ou alkyle en $C_1$ à $C_{12}$,
$R_6$ = H, $R_7$ = H ou alkyle en $C_1$ à $C_3$
$R_8$ = H ou alkyle en $C_1$ à $C_3$ et
$R_9$ est un ester en $C_1$ à $C_{12}$ ou un aryle en $C_5$
ou $C_6$".

**15.** Agent de compatibilité, de dispersion et de broyage selon la revendication 14 caractérisé en ce que ledit copolymère a une viscosité spécifique comprise entre 0,2 et 10,0 et préférentiellement entre 0,25 et 5,0 et très préférentiellement entre 0,4 et 1,2.

**Revendications pour l'Etat contractant suivant : ES**

**1.** Utilisation d'un copolymère de formule générale :

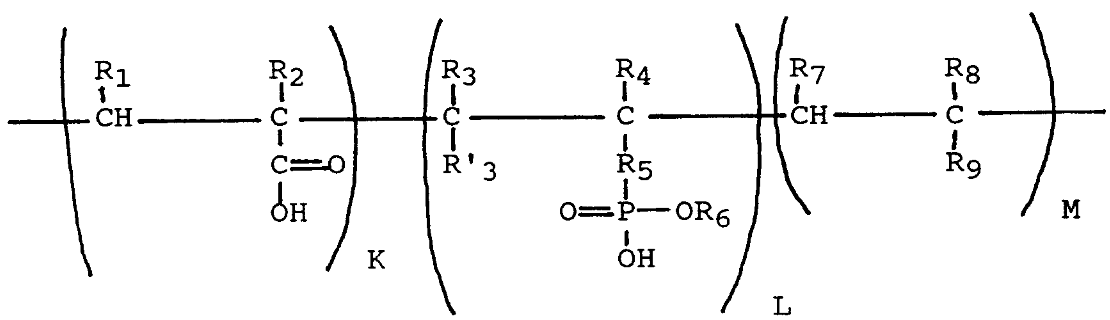

symbolisé par la formule :

$$-(A)_K-(B)_L-(C)_M-$$

dans laquelle le momomère éthylénique (B) possède une fonction phosphatée ou phosphonée, le monomère (A) est un monomère éthylénique à fonction carboxylique et le monomère (C) est un monomère éthylénique du type esters ou substitués, et dans laquelle L prend une valeur comprise entre 5 et 95 parties en poids avec K + L + M = 100 parties en poids, K et M pouvant séparément prendre la valeur 0, et dans laquelle :

- $R_1$ est l'hydrogène, une fonction carboxylique ou une fonction carboxylique estérifiée par un alcool en $C_1$ à $C_{12}$ préférentiellement par un alcool en $C_1$ à $C_3$,
- $R_2$ est l'hydrogène ou un alkyl en $C_1$ à $C_{12}$ préférentiellement en $C_1$ à $C_3$,
- $R_3$ et $R'_3$ sont l'hydrogène, une fonction carboxylique, un halogène, un alkyle en $C_1$ à $C_{12}$ de préférence en $C_1$ à $C_3$, un aryle substitué ou non,
- $R_4$ est l'hydrogène, un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est :

a) dans le cas d'une fonction phosphate,

- soit un ester carboxylique d'oxyde d'éthylène ou d'oxyde de propylène répondant à la formule :

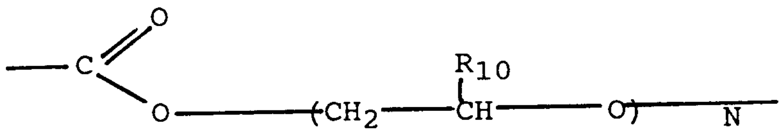

dans laquelle $R_{10}$ peut être l'hydrogène ou un groupement méthyle et N peut prendre des valeurs de l'intervalle 1 à 50 et de préférence 1 à 10,

- soit un ester carboxylique d'alkyle, d'aryle ou d'alkaryle de formule :

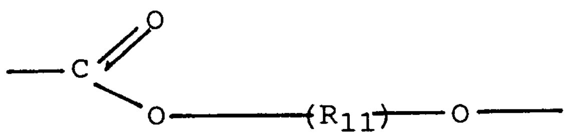

dans laquelle $R_{11}$ peut prendre les valeurs $C_1$ à $C_{12}$,

- soit un amide substitué de formule :

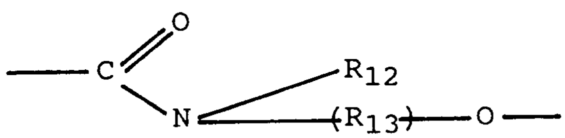

dans laquelle $R_{12}$ est l'hydrogène ou un alkyle en $C_1$ à $C_{12}$ et de préférence de $C_1$ à $C_3$, un aryle en $C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,

- soit de l'oxygène.

b) dans le cas d'une fonction phosphonate :

- soit un alkyle en $C_1$ à $C_{12}$ et de préférence de $C_1$ à $C_3$,
- soit un aryle en $C_5$ ou $C_6$ substitué ou non,
- soit un alkaryle,
- soit un ester en $C_1$ à $C_{12}$ et de préférence en $C_1$ à $C_3$,
- soit un amide substitué,

- $R_6$ est l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$et de préférence en $C_1$ à $C_3$, un aryle en $C_5$ ou $C_6$, un alkaryle,
- $R_8$ est l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté,

comme agent de compatibilité, de dispersion et de broyage mis en oeuvre au cours d'opérations de dispersion et de broyage de suspensions aqueuses pigmentaires formulées à partir d'un mélange de pigments minéraux autres que des argiles gonflantes et dont l'un au moins est du sulfate de calcium hydraté.

**2.** Utilisation d'un copolymère selon la revendication 1 caractérisé en ce que ledit copolymère résulte de la copolymérisation selon les procédés connus, à pression atmosphérique ou sous pression, en présence d'initiateurs et des régulateurs appropriés, en milieu aqueux, alcoolique, hydroalcoolique,

aromatique, aliphatique ou dans un solvant halogéné d'au moins deux monomères éthyléniques dont l'un, le monomère (B), possède une fonction phosphatée ou phosphonée.

**3.** Utilisation d'un copolymère selon les revendications 1 et 2 caractérisée en ce que le milieu de polymérisation est choisi dans le groupe constitué par l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptoproprionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

**4.** Utilisation d'un copolymère selon les revendications 1 à 3 caractérisée en ce que ledit copolymère a une viscosité spécifique comprise entre 0,2 et 10,0 et préférentiellement entre 0,25 et 5,0 et très préférentiellement entre 0,4 et 1,2.

**5.** Utilisation d'un copolymère selon les revendications 1 à 4 caractérisée en ce que ledit copolymère est mis en oeuvre sous forme acide.

**6.** Utilisation d'un copolymère selon les revendications 1 à 4 caractérisée en ce que ledit copolymère est au moins partiellement neutralisé par un agent de neutralisation disposant d'une fonction monovalente.

**7.** Utilisation d'un copolymère selon la revendication 6 caractérisée en ce que l'agent de neutralisation est choisi dans le groupe des métaux alcalins et assimilés et préférentiellement dans le groupe constitué par le lithium, le sodium, le potassium, l'ammonium ou l'amine éventuellement.

**8.** Utilisation d'un copolymère selon les revendications 6 ou 7 caractérisée en ce que l'agent de neutralisation monovalent est associé à un agent de neutralisation polyvalent.

**9.** Utilisation d'un copolymère selon la revendication 8 caractérisée en ce que l'agent de neutralisation polyvalent est choisi dans le groupe constitué par les alcalino-terreux ou assimilés, préférentiellement par le calcium, le magnésium.

**10.** Suspension aqueuse pigmentaire contenant au moins du sulfate de calcium hydraté caractérisée en ce qu'elle contient le copolymère tel que décrit dans les revendications 1 à 9 et ayant des applications comme charge pigmentaire dans la fabrication du papier, de la peinture, et des matières plastiques et caractérisée en ce qu'elle est réalisée selon les étapes suivantes :

a) on réalise sous agitation la préparation par délitage d'une suspension aqueuse de sulfate de calcium hydraté, seul ou en mélange, en introduisant d'abord tout ou partie de l'agent selon l'invention dans la phase aqueuse, puis le(s) pigment(s) de manière à obtenir une suspension fluide et souhaitablement homogène.

b) on introduit en continu la suspension préparée selon (a) dans une zone de broyage constituée par un broyeur à microéléments,

c) on maintient la température de la suspension au cours du broyage à un niveau inférieur à 100 °C et préférentiellement comprise entre la température ambiante et 80 °C,

d) on malaxe la suspension à broyer en présence des microéléments pendant le temps nécessaire à l'obtention de la granulométrie recherchée,

e) éventuellement, on introduit au cours du broyage en au moins une fois une fraction complémentaire de l'agent,

f) à la sortie du broyeur, on sépare en continu la suspension de $CaSO_4$, $2H_2O$ seul ou en mélange finement broyée d'avec les corps broyants et les particules refusées parce que trop grossières,

g) éventuellement, on introduit dans la suspension finement broyée au moins un agent modificateur de la rhéologie.

**11.** Suspension aqueuse pigmentaire selon la revendication 10, caractérisé en ce que le copolymère est introduit à raison de 0,05 à 4% en poids de matières actives par rapport au poids sec des matériaux minéraux, et préférentiellement à raison de 0,5 à 2,5%.

**12.** Suspension aqueuse pigmentaire selon les revendications 10 ou 11, caractérisé en ce qu'elle a une concentration en matière sèche d'au moins 65% en poids, préférentiellement comprise entre 70 et 80% en poids.

**13.** Agent de compatibilité, de dispersion et de broyage mis en oeuvre au cours d'opérations de dispersion et de broyage pour suspensions aqueuses pigmentaires formulées à partir d'un mélange de pigments minéraux, dont l'un au moins est du sulfate de calcium hydraté en vue d'annihiler l'effet viscosifiant provoqué par la présence dudit sulfate, caractérisé en ce que ledit agent est un copolymère de formule générale :

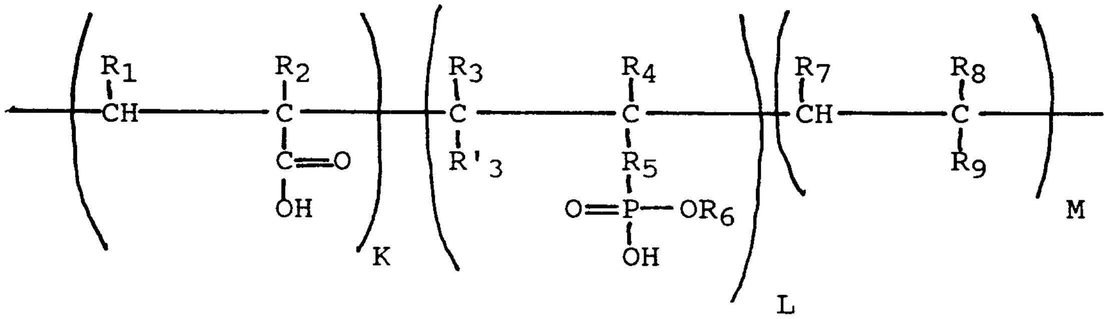

symbolisé par la formule :

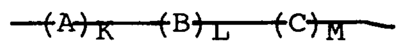

dans laquelle le momomère éthylénique (B) possède une fonction phosphatée ou phosphonée, le monomère (A) est un monomère éthylénique à fonction carboxylique et le monomère (C) est un monomère éthylénique du type esters ou substitués, et dans laquelle L prend une valeur comprise entre 5 et 95 parties en poids avec K + L + M = 100 parties en poids, K et M pouvant séparément prendre la valeur 0, et dans laquelle :

- $R_1$ est l'hydrogène, une fonction carboxylique ou une fonction carboxylique estérifiée par un alcool en $C_1$ à $C_{12}$ préférentiellement par un alcool en $C_1$ à $C_3$,
- $R_2$ est l'hydrogène ou un alkyl en $C_1$ à $C_{12}$ préférentiellement en $C_1$ à $C_3$,
- $R_3$ et $R'_3$ sont l'hydrogène, une fonction carboxylique, un halogène, un alkyle en $C_1$ à $C_{12}$ de préférence en $C_1$ à $C_3$, un aryle substitué ou non,
- $R_4$ est l'hydrogène, un alkyle en $C_1$ à $C_{12}$ de préférence en $C_1$ à $C_3$, un aryle substitué ou non, une fonction carboxylique, ou une fonction carboxylique estérifiée par un alcool en $C_1$ à $C_{12}$ de préférence en $C_1$ à $C_3$.
- $R_5$ est :

  a) dans le cas d'une fonction phosphate :

  - soit un ester carboxylique d'oxyde d'éthylène ou d'oxyde de propylène répondant à la formule :

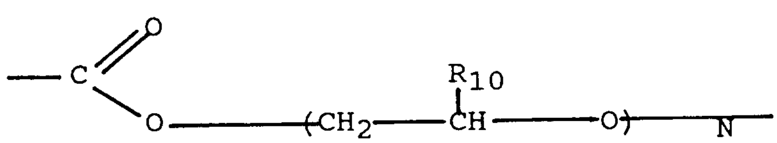

dans laquelle $R_{10}$ peut être l'hydrogène ou un groupement méthyle et N peut prendre des valeurs de l'intervalle 1 à 50 et de préférence 1 à 10,

- soit un ester carboxylique d'alkyle, d'aryle ou d'alkaryle de formule :

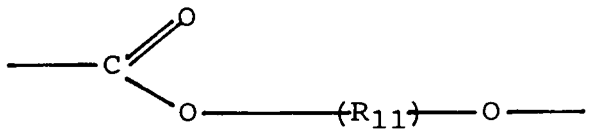

dans laquelle $R_{11}$ peut prendre les valeurs $C_1$ à $C_{12}$,

- soit un amide substitué de formule :

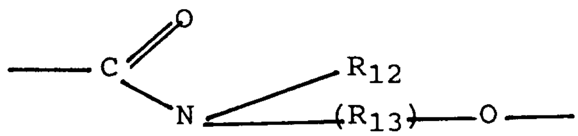

dans laquelle $R_{12}$ est l'hydrogène ou un alkyle en $C_1$ à $C_{12}$ et de préférence de $C_1$ à $C_3$, un aryle en $C_5$ ou $C_6$ substitué ou non, ou un alkaryle, $R_{13}$ peut être un alkyle en $C_1$ à $C_{12}$, et de préférence en $C_1$ à $C_3$, un aryle en $C_5$ ou $C_6$ substitué ou non ou un alkaryle,

- soit de l'oxygène.

b) dans le cas d'une fonction phosphonate :

- soit un alkyle en $C_1$ à $C_{12}$ et de préférence de $C_1$ à $C_3$,
- soit un aryle en $C_5$ ou $C_6$ substitué ou non,
- soit un alkaryle,
- soit un ester en $C_1$ à $C_{12}$ et de préférence en $C_1$ à $C_3$,
- soit un amide substitué,

- $R_6$ est l'hydrogène, un cation, un groupement ammonium, une amine, un alkyle en $C_1$ à $C_3$, un aryle en $C_5$ ou $C_6$ substitué ou non, un alkaryle, un ester en $C_1$ à $C_{12}$ et de préférence en $C_1$ à $C_3$, ou un amide substitué,
- $R_7$ est l'hydrogène, un groupement carboxylique, un ester en $C_1$ à $C_{12}$ et de préférence en $C_1$ à $C_3$, un alkyle en $C_1$ à $C_{12}$ et de préférence en $C_1$ à $C_3$, un aryle en $C_5$ ou $C_6$, un alkaryle,
- $R_8$ est l'hydrogène, un groupement carboxylique, un alkyle en $C_1$ à $C_3$, ou un halogène,
- $R_9$ est un ester en $C_1$ à $C_{12}$, de préférence en $C_1$ à $C_5$, un amide susbtitué ou non, un alkyle en $C_1$ à $C_{12}$, de préférence en $C_1$ à $C_3$, un aryle en $C_5$ ou $C_6$, un alkaryle, un halogène, un groupement carboxylique ou encore un groupement alkyle ou aryle sulfoné ou sulfaté,

à l'exclusion des radicaux :

$R_5$ =

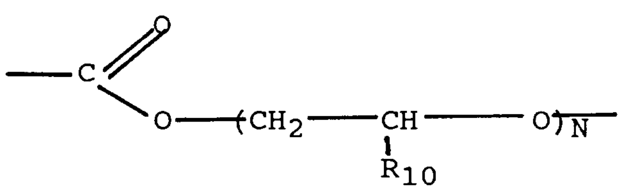

avec N = 1

ou $R_5$ =

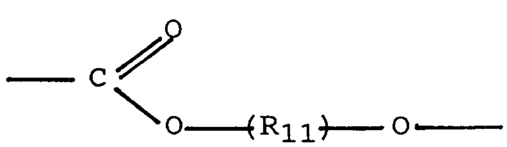

avec $R_{11}$ radical alkyle en $C_1$ à $C_8$
lorsque L prend une valeur comprise entre 5 et 8 parties en poids avec $R_3$ = H, $R'_3$ = H, $R_4$ = H ou un alkyle en $C_1$ à $C_8$.

- Ainsi qu'à l'exclusion des radicaux

$R_5$ =

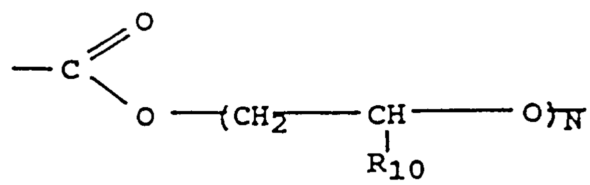

avec n = 1 à 30
ou
$R_5$ =

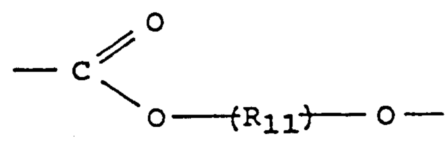

avec $R_{11}$ radical en $C_1$ à $C_{12}$
lorsque $R_1$ = H, $R_2$ = H ou alkyle en $C_1$ à $C_{12}$
$R_3$ = $R'_3$ = H, $R_4$ = H ou alkyle en $C_1$ à $C_{12}$,
$R_6$ = H, $R_7$ = H, $R_8$ = H ou alkyle en $C_1$ à $C_3$
et $R_9$ est un amide non substitué avec K et M
différents de 0.
ou bien lorsque $R_3$ = $R'_3$ = H, $R_4$ = H ou alkyle en $C_1$ à $C_{12}$,
$R_6$ = H, $R_7$ = H ou alkyle en $C_1$ à $C_3$
$R_8$ = H ou alkyle en $C_1$ à $C_3$ et
$R_9$ est un ester en $C_1$ à $C_{12}$ ou un aryle en $C_5$
ou $C_6$".

**14.** Agent de compatibilité, de dispersion et de broyage selon la revendication 13 caractérisé en ce que ledit copolymère a une viscosité spécifique comprise entre 0,2 et 10,0 et préférentiellement entre 0,25 et 5,0 et très préférentiellement entre 0,4 et 1,2.

## Claims

### Claims for the following Contracting States : AT, BE, DE, GB, IT, NL, SE

**1.** Utilisation of a copolymer of the following general formula:

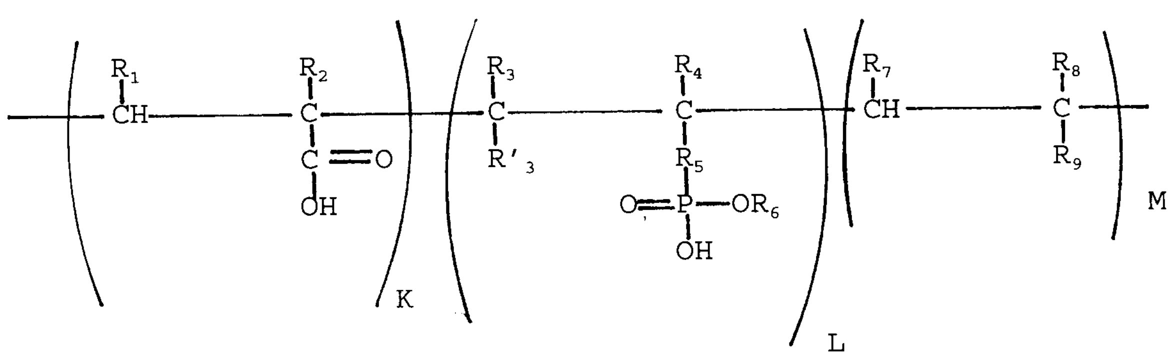

represented by the formula:

$$-(A)_K-(B)_L-(C)_M-$$

in which the ethylenic monomer (B) possesses a phosphated or phosphonated function, the monomer (A) is an ethylenic monomer with a carboxylic function and the monomer (C) is an ethylenic monomer of the esters or substitutes type, and in which L takes a value included between 5 and 95 parts by weight with K + L + M = 100 parts by weight, K and M being able to separately take the value 0, and in which:

- $R_1$ is hydrogen, a carboxylic function or a carboxylic function esterified by an alcohol with $C_1$ to $C_{12}$ preferably by an alcohol with $C_1$ to $C_3$,
- $R_2$ is hydrogen or an alkyl with $C_1$ to $C_{12}$ preferably with $C_1$ to $C_3$,
- $R_3$ and $R'_3$ are hydrogen, a carboxylic function, a halogen, an alkyl with $C_1$ to $C_{12}$ preferably with $C_1$ to $C_3$, an aryl substituted or not,
- $R_4$ is hydrogen, an alkyl with $C_1$ to $C_{12}$ preferably with $C_1$ to $C_3$, an aryl substituted or not, a carboxylic function, or a carboxylic function esterified by an alcohol with $C_1$ to $C_{12}$ preferably with $C_1$ to $C_3$.
- $R_5$ is:
  a) in the case of a phosphate function,
    - either a carboxylic ester of ethylene oxide or of propylene oxide corresponding to the formula:

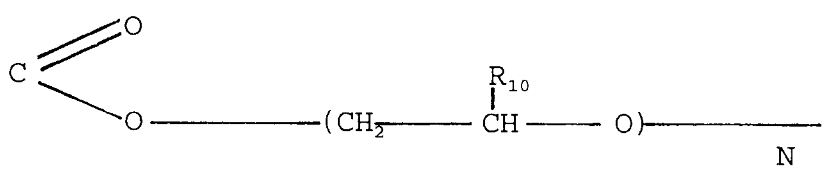

in which $R_{10}$ can be hydrogen or a methyl group and N can take values in the range 1 to 50 and preferably 1 to 10,
    - or a carboxylic ester of an alkyl, an aryl or alkaryl of the formula:

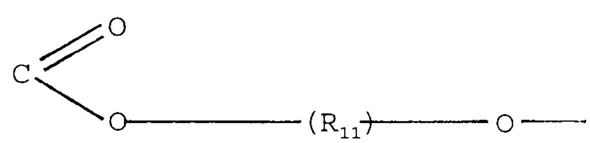

in which $R_{11}$ can take the values $C_1$ to $C_{12}$,
    - or a substituted amide of the formula:

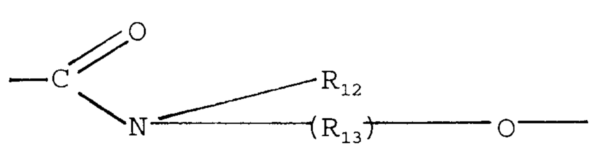

in which $R_{12}$ is hydrogen or an alkyl with $C_1$ to $C_{12}$ and preferably $C_1$ to $C_3$, an aryl with $C_5$ to $C_6$ substituted or not, or an alkaryl, $R_{13}$ can be an alkyl with $C_1$ to $C_{12}$ and preferably $C_1$ to $C_3$, an aryl with $C_5$ or $C_6$ substituted or not or an alkaryl,
    - or oxygen.
  b) in the case of a phosphonate function:
    - either an alkyl with $C_1$ to $C_{12}$ and preferably from $C_1$ to $C_3$,

- or an aryl with $C_5$ to $C_6$ substituted or not,
- or an alkaryl,
- or an ester with $C_1$ to $C_{12}$ and preferably with $C_1$ to $C_3$,
- or a substituted amide,

- $R_6$ is hydrogen, a cation, an ammonium group, an amine, an alkyl with $C_1$ to $C_3$, an aryl with $C_5$ or $C_6$ substituted or not, an alkaryl, an ester with $C_1$ to $C_{12}$ and preferably with $C_1$ to $C_3$, or a substituted amide,
- $R_7$ is hydrogen, a carboxylic group, an ester with $C_1$ to $C_{12}$ and preferably with $C_1$ to $C_3$, an alkyl with $C_1$ to $C_{12}$ and preferably with $C_1$ to $C_3$, an aryl with $C_5$ or $C_6$, or an alkaryl,
- $R_8$ is hydrogen, a carboxylic group, an alkyl with $C_1$ to $C_3$, or a halogen,
- $R_9$ is an ester with $C_1$ to $C_{12}$ and preferably with $C_1$ to $C_5$, an amide substituted or not, an alkyl with $C_1$ to $C_{12}$ and preferably with $C_1$ to $C_3$, an aryl with $C_5$ or $C_6$, an alkaryl, a halogen, a carboxylic group or an alkyl or sulfonated or sulphated aryl group ,

as a compatibility, dispersion and crushing agent used in the course of operations of dispersion and crushing of aqueous pigment suspensions formulated from a mixture of mineral pigments other than expanding clays and of which at least one is hydrated calcium sulphate.

**2.** Utilisation of a copolymer as described in claim 1 characterised by the fact that the said copolymer results from copolymerisation according to known procedures, at atmospheric pressure or under pressure, in the presence of appropriate initiators and regulators, in an aqueous, alcoholic, hydroalcoholic, aromatic, or aliphatic medium or in a halogenated solvent of at least two ethylenic monomers of which one, the monomer (B), possesses a phosphated or phosphonated function.

**3.** Utilisation of a copolymer as described in claims 1 and 2 characterised by the fact that the polymerisation medium is chosen from the group comprising water, methanol, ethanol, propanol, isopropanol, the butanols, or dimethylformamide, dimethyl sulphoxide, tetrahydrofurane, acetone, methylethylketone, ethyl acetate, butyl acetate, hexane, heptane, benzene, toluene, ethylbenzene, xylene, mercaptoethanol, tertiododecylmercaptan, thioglycolic acid and its esters, n-dodecylmercaptan, acetic, tartaric, lactic, citric, gluconic or glucoheptonic acid, 2-mercaptoproprionic acid, thiodiethanol, halogenated solvents such as carbon tetrachloride, chloroform, methylene chloride, methyl chloride, the ethers of monopropylene glycol or diethylene glycol.

**4.** Utilisation of a copolymer as described in claims 1 to 3 characterised by the fact the said copolymer has a specific viscosity of between 0.2 and 10.0 and preferably between 0.25 and 5.0 and very preferably between 0.4 and 1.2.

**5.** Utilisation of a copolymer as described in claims 1 to 4 characterised by the fact the said copolymer is used in acidic form.

**6.** Utilisation of a copolymer as described in claims 1 to 4 characterised by the fact the said copolymer is at least partially neutralised by a neutralising agent having a monovalent function.

**7.** Utilisation of a copolymer as described in claim 6 characterised by the fact that the neutralising agent is chosen from the alcaline and similar metals group and preferably from the group comprising lithium, sodium, potassium, ammonium or possibly the amine.

**8.** Utilisation of a copolymer as described in claims 6 or 7 characterised by the fact that the monovalent neutralising agent is associated with a polyvalent neutralising agent.

**9.** Utilisation of a copolymer as described in claim 8 characterised by the fact that the polyvalent neutralising agent is chosen from the group comprising the alkaline earths and similar elements, preferably calcium or magnesium.

**10.** Aqueous pigmentary suspension containing at least hydrated calcium sulphate characterised by the fact that it contains the copolymer as described in claims 1 to 9 and characterised by the fact that it is produced in the following stages:

a) the preparation by slurrying, under agitation, of an aqueous suspension of hydrated calcium sulphate, alone or in a mixture, introducing first all or part of the agent as described in the invention

in the aqueous phase, then the pigment(s) so as to obtain a suspension which is fluid and suitably homogeneous.

b) the continuous introduction of the suspension as prepared under (a) in a crushing zone comprised of a micro-element crusher.

c) the temperature of the suspension during crushing is maintained at a level below 100 °C and preferably between ambient temperature and 80 °C.

d) the suspension to be crushed in presence of the microelements is mixed for the time required to obtain the desired granulometry.

e) a further fraction of the agent may be introduced at least once during crushing.

f) on leaving the crusher, the finely crushed suspension of $CaSO_4$ $2H_2O$, alone or as a mixture, is continuously separated from the crushing bodies and the particles rejected because of their excessive size.

g) at least one rheological modifying agent may be introduced into the finely crushed suspension.

**11.** An aqueous pigmentary suspension as described in claim 10, characterised by the fact that the copolymer is introduced at a rate of 0.05 to 4 % by weight of the active matter in relation to the dry weight of the mineral materials, and preferably at a rate of 0.5 to 2.5 %.

**12.** An aqueous pigmentary suspension as described in claims 10 or 11, characterised by the fact that it has a concentration of dry matter of at least 65 % by weight, preferably between 70 and 80 % by weight.

**13.** Applications of the aqueous pigmentary suspensions by use of any one of claims 1 to 12 as pigmentary component in the manufacture of paper, paint or plastics.

**14.** A compatibility, dispersion and crushing agent used in the course of operations of dispersion and crushing of aqueous pigment suspensions formulated from a mixture of mineral pigments, of which at least one is hydrated calcium sulphate with a view to cancel the viscosifying effect caused by the presence of the said sulphate, characterised by the fact that the said agent is a copolymer of the following general formula:

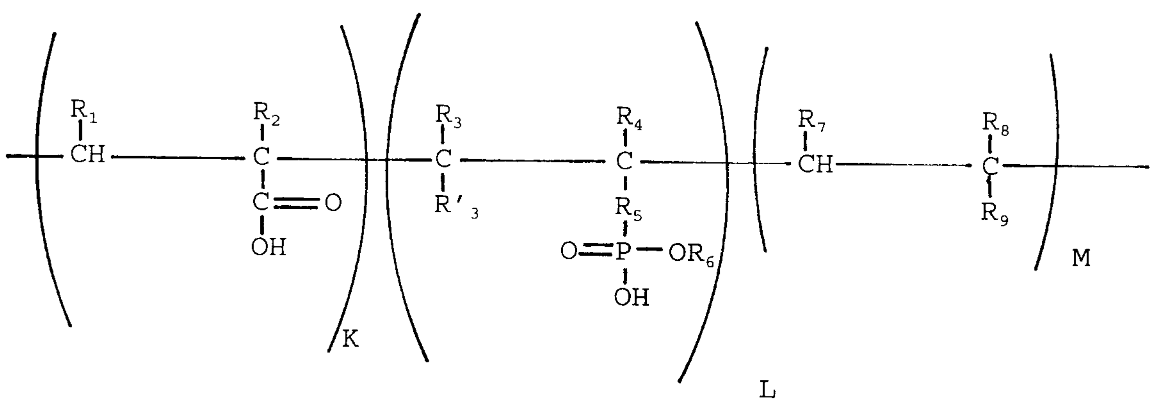

represented by the formula:-$(A)_K$-$(B)_L$-$(C)_M$-

in which the ethylenic monomer (B) possesses a phosphated or phosphonated function, the monomer (A) is an ethylenic monomer with a carboxylic function and the monomer (C) is an ethylenic monomer of the esters or substitutes type, and in which L takes a value included between 5 and 95 parts of weight with K + L + M = 100 parts of weight, K and M being able to separately take the value 0, and in which:

- $R_1$ is hydrogen, a carboxylic function or a carboxylic function esterified by an alcohol with $C_1$ to $C_{12}$ preferably by an alcohol with $C_1$ to $C_3$,
- $R_2$ is hydrogen or an alkyl with $C_1$ to $C_{12}$ preferably with $C_1$ to $C_3$,
- $R_3$ and $R'_3$ are hydrogen, a carboxylic function, a halogen, an alkyl with $C_1$ to $C_{12}$ preferably with $C_1$ to $C_3$, an aryl substituted or not,
- $R_4$ is hydrogen, an alkyl with $C_1$ to $C_{12}$ preferably with $C_1$ to $C_3$, an aryl substituted or not, a carboxylic function, or a carboxylic function esterified by an alcohol with $C_1$ to $C_{12}$ preferably with

$C_1$ to $C_3$.

- $R_5$ is:

  a) in the case of a phosphate function,

  - either a carboxylic ester of ethylene oxide or of propylene oxide corresponding to the formula:

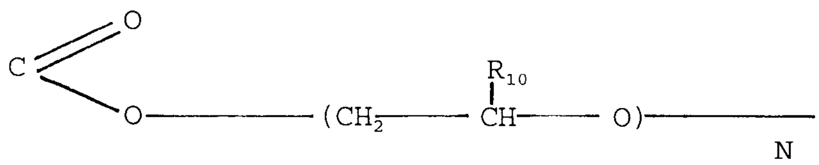

    in which $R_{10}$ can be hydrogen or a methyl group and N can take values in the range 1 to 50 and preferably 1 to 10,

  - or a carboxylic ester of an alkyl, an aryl or alkaryl of the formula:

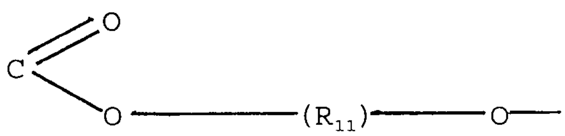

    in which $R_{11}$ can take the values $C_1$ to $C_{12}$,

  - or a substituted amide of the formula:

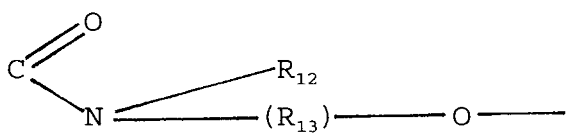

    in which $R_{12}$ is hydrogen or an alkyl with $C_1$ to $C_{12}$ and preferably $C_1$ to $C_3$, an aryl with $C_5$ to $C_6$ substituted or not, or an alkaryl, $R_{13}$ can be an alkyl with $C_1$ to $C_{12}$ and preferably $C_1$ to $C_3$, an aryl with $C_5$ or $C_6$ substituted or not or an alkaryl,

  - or oxygen.

  b) in the case of a phosphonate function:

  - either an alkyl with $C_1$ to $C_{12}$ and preferably from $C_1$ to $C_3$,
  - or an aryl with $C_5$ to $C_6$ substituted or not,
  - or an alkaryl,
  - or an ester with $C_1$ to $C_{12}$ and preferably with $C_1$ to $C_3$,
  - or a substituted amide,

- $R_6$ is hydrogen, a cation, an ammonium group, an amine, an alkyl with $C_1$ to $C_3$, an aryl with $C_5$ or $C_6$ substituted or not, an alkaryl, an ester with $C_1$ to $C_{12}$ and preferably with $C_1$ to $C_3$, or a substituted amide,
- $R_7$ is hydrogen, a carboxylic group, an ester with $C_1$ to $C_{12}$ and preferably with $C_1$ to $C_3$, an alkyl with $C_1$ to $C_{12}$ and preferably with $C_1$ to $C_3$, an aryl with $C_5$ or $C_6$, or an alkaryl,
- $R_8$ is hydrogen, a carboxylic group, an alkyl with $C_1$ to $C_3$, or a halogen,
- $R_9$ is an ester with $C_1$ to $C_{12}$ and preferably with $C_1$ to $C_5$, an amide substituted or not, an alkyl with $C_1$ to $C_{12}$ and preferably with $C_1$ to $C_3$, an aryl with $C_5$ or $C_6$, an alkaryl, a halogen, a carboxylic group or an alkyl or sulfonated or sulphated aryl group ,

  with the exception of the following radicals:

  $R_5$ =

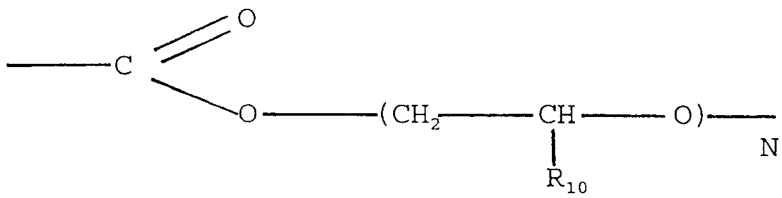

with N = 1
or $R_5$ =

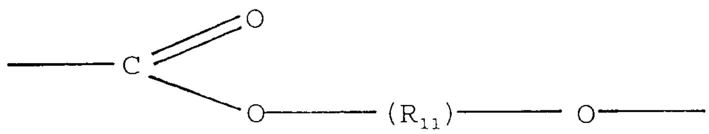

with $R_{11}$ an alkyl radical with $C_1$ to $C_8$.
when L takes a value between 5 and 8 parts by weight with $R_3$ = H, $R'_3$ = H, $R_4$ = H or an alkyl with $C_1$ to $C_8$.

- and with the exception also of the following radicals:
  $R_5$ =

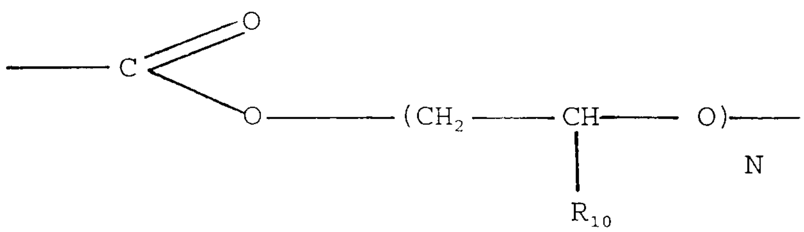

with N = 1 to 30
or
$R_5$ =

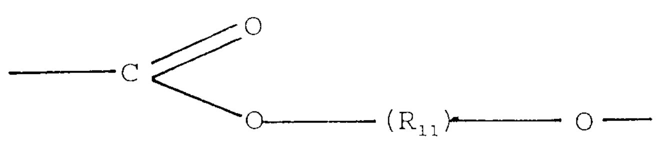

with $R_{11}$ an alkyl radical with $C_1$ to $C_{12}$.
when $R_1$ = H, $R_2$ = H or an alkyl with $C_1$ to $C_{12}$,
$R_3$ = $R'_3$ = H, $R_4$ = H or an alkyl with $C_1$ to $C_{12}$,
$R_6$ = H, $R_7$ = H, $R_8$ = H or an alkyl with $C_1$ to $C_3$
and $R_9$ is a non substituted amide with K and M not equal to 0.
or when $R_3$ = $R'_3$ = H, $R_4$ = H or an alkyl with $C_1$ to $C_{12}$,
$R_6$ = H, $R_7$ = H or an alkyl with C1 to C3,
$R_8$ = H or an alkyl with $C_1$ to $C_3$ and
$R_9$ is an ester with $C_1$ to $C_{12}$ or an aryl with $C_5$ or $C_6$.

**15.** A compatibility, dispersion and crushing agent as described in claim 14 characterised by the fact that the said copolymer has a specific viscosity between 0.2 and 10.0 and preferably between 0.25 and 5.0 and very preferably between 0.4 and 1.2.

**Claims for the following Contracting State : ES**

**1.** Utilisation of a copolymer of the following general formula:

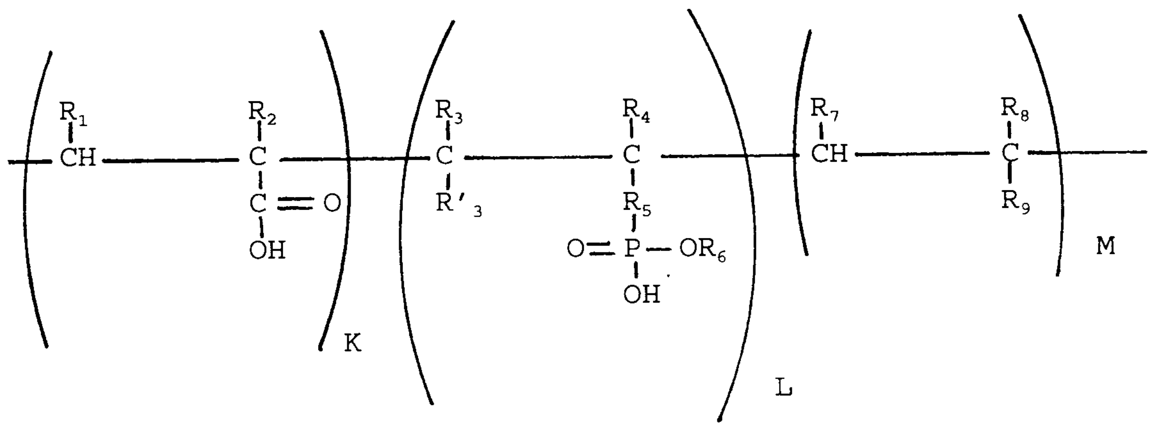

represented by the formula:

$$-(A)_K-(B)_L-(C)_M-$$

in which the ethylenic monomer (B) possesses a phosphated or phosphonated function, the monomer (A) is an ethylenic monomer with a carboxylic function and the monomer (C) is an ethylenic monomer of the esters or substitutes type, and in which L takes a value included between 5 and 95 parts by weight with K + L + M = 100 parts by weight, K and M being able to separately take the value 0, and in which:

- $R_1$ is hydrogen, a carboxylic function or a carboxylic function esterified by an alcohol with $C_1$ to $C_{12}$ preferably by an alcohol with $C_1$ to $C_3$,
- $R_2$ is hydrogen or an alkyl with $C_1$ to $C_{12}$ preferably with $C_1$ to $C_3$,
- $R_3$ and $R'_3$ are hydrogen, a carboxylic function, a halogen, an alkyl with $C_1$ to $C_{12}$ preferably with $C_1$ to $C_3$, an aryl substituted or not,
- $R_4$ is hydrogen, an alkyl with $C_1$ to $C_{12}$ preferably with $C_1$ to $C_3$, an aryl substituted or not, a carboxylic function, or a carboxylic function esterified by an alcohol with $C_1$ to $C_{12}$ preferably with $C_1$ to $C_3$.
- $R_5$ is:

  a) in the case of a phosphate function,

  - either a carboxylic ester of ethylene oxide or of propylene oxide corresponding to the formula:

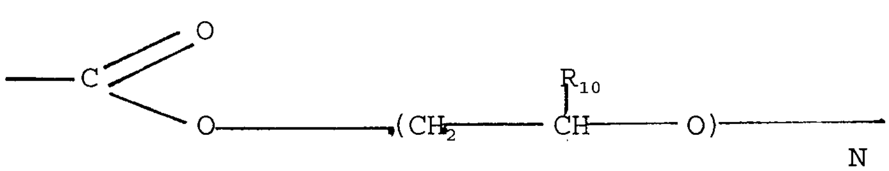

in which $R_{10}$ can be hydrogen or a methyl group and N can take values in the range 1 to 50 and preferably 1 to 10,

- or a carboxylic ester of an alkyl, an aryl or alkaryl of the formula:

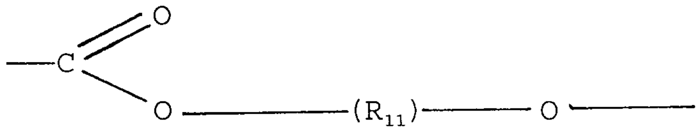

in which $R_{11}$ can take the values $C_1$ to $C_{12}$,
- or a substituted amide of the formula:

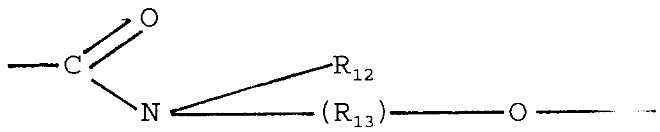

in which $R_{12}$ is hydrogen or an alkyl with $C_1$ to $C_{12}$ and preferably $C_1$ to $C_3$, an aryl with $C_5$ to $C_6$ substituted or not, or an alkaryl, $R_{13}$ can be an alkyl with $C_1$ to $C_{12}$ and preferably $C_1$ to $C_3$, an aryl with $C_5$ or $C_6$ substituted or not or an alkaryl,
- or oxygen.

b) in the case of a phosphonate function:
- either an alkyl with $C_1$ to $C_{12}$ and preferably from $C_1$ to $C_3$,
- or an aryl with $C_5$ to $C_6$ substituted or not,
- or an alkaryl,
- or an ester with $C_1$ to $C_{12}$ and preferably with $C_1$ to $C_3$,
- or a substituted amide,

- $R_6$ is hydrogen, a cation, an ammonium group, an amine, an alkyl with $C_1$ to $C_3$, an aryl with $C_5$ or $C_6$ substituted or not, an alkaryl, an ester with $C_1$ to $C_{12}$ and preferably with $C_1$ to $C_3$, or a substituted amide,
- $R_7$ is hydrogen, a carboxylic group, an ester with $C_1$ to $C_{12}$ and preferably with $C_1$ to $C_3$, an alkyl with $C_1$ to $C_{12}$ and preferably with $C_1$ to $C_3$, an aryl with $C_5$ or $C_6$, or an alkaryl,
- $R_8$ is hydrogen, a carboxylic group, an alkyl with $C_1$ to $C_3$, or a halogen,
- $R_9$ is an ester with $C_1$ to $C_{12}$ and preferably with $C_1$ to $C_5$, an amide substituted or not, an alkyl with $C_1$ to $C_{12}$ and preferably with $C_1$ to $C_3$, an aryl with $C_5$ or $C_6$, an alkaryl, a halogen, a carboxylic group or an alkyl or sulfonated or sulphated aryl group ,

as a compatibility, dispersion and crushing agent used in the course of operations of dispersion and crushing of aqueous pigment suspensions formulated from a mixture of mineral pigments other than expanding clays and of which at least one is hydrated calcium sulphate.

**2.** Utilisation of a copolymer as described in claim 1 characterised by the fact that the said copolymer results from copolymerisation according to known procedures, at atmospheric pressure or under pressure, in the presence of appropriate initiators and regulators, in an aqueous, alcoholic, hydroalcoholic, aromatic, aliphatic medium or in a halogenated solvent of at least two ethylenic monomers of which one, the monomer (B), possesses a phosphated or phosphonated function.

**3.** Utilisation of a copolymer as described in claims 1 and 2 characterised by the fact that the polymerisation medium is chosen from the group comprising water, methanol, ethanol, propanol, isopropanol, the butanols, or dimethylformamide, dimethyl sulphoxide, tetrahydrofurane, acetone, methylethylketone, ethyl acetate, butyl acetate, hexane, heptane, benzene, toluene, ethylbenzene, xylene, mercaptoethanol, tertiododecylmercaptan, thioglycolic acid and its esters, n-dodecylmercaptan, acetic, tartaric, lactic, citric, gluconic or glucoheptonic acid, 2-mercaptoproprionic acid, thiodiethanol, halogenated solvents such as carbon tetrachloride, chloroform, methylene chloride, methyl chloride, the ethers of monopropylene glycol or diethylene glycol.

**4.** Utilisation of a copolymer as described in claims 1 to 3 characterised by the fact the said copolymer has a specific viscosity of between 0.2 and 10.0 and preferably between 0.25 and 5.0 and very preferably between 0.4 and 1.2.

**5.** Utilisation of a copolymer as described in claims 1 to 4 characterised by the fact the said copolymer is used in acidic form.

**6.** Utilisation of a copolymer as described in claims 1 to 4 characterised by the fact the said copolymer is at least partially neutralised by a neutralising agent having a monovalent function.

**7.** Utilisation of a copolymer as described in claim 6 characterised by the fact that the neutralising agent is chosen from the alcaline and similar metals group and preferably from the group comprising lithium, sodium, potassium, ammonium or possibly the amine.

**8.** Utilisation of a copolymer as described in claims 6 or 7 characterised by the fact that the monovalent neutralising agent is associated with a polyvalent neutralising agent.

**9.** Utilisation of a copolymer as described in claim 8 characterised by the fact that the polyvalent neutralising agent is chosen from the group comprising the alkaline earths and similar elements, preferably calcium or magnesium.

**10.** Aqueous pigmentary suspension containing at least hydrated calcium sulphate characterised by the fact that it contains the copolymer as described in claims 1 to 9 and characterised by the fact that it is produced in the following stages:

a) the preparation by slurrying, under agitation, of an aqueous suspension of hydrated calcium sulphate, alone or in a mixture, introducing first all or part of the agent as described in the invention in the aqueous phase, then the pigment(s) so as to obtain a suspension which is fluid and suitably homogeneous.

b) the continuous introduction of the suspension as prepared under (a) in a crushing zone comprised of a micro-element crusher.

c) the temperature of the suspension during crushing is maintained at a level below 100 °C and preferably between ambient temperature and 80 °C.

d) the suspension to be crushed in presence of the microelements is mixed for the time required to obtain the desired granulometry.

e) a further fraction of the agent may be introduced at least once during crushing.

f) on leaving the crusher, the finely crushed suspension of $CaSO_4$ $2H_2O$, alone or as a mixture, is continuously separated from the crushing bodies and the particles rejected because of their excessive size.

g) at least one rheological modifying agent may be introduced into the finely crushed suspension.

**11.** An aqueous pigmentary suspension as described in claim 10, characterized by the fact that the copolymer is introduced at a rate of 0.05 to 4 % by weight of the active matter in relation to the dry weight of the mineral materials, and preferably at a rate of 0.5 to 2.5 %.

**12.** An aqueous pigmentary suspension as described in claims 10 or 11, characterised by the fact that it has a concentration of dry matter of at least 65 % by weight, preferably between 70 and 80 % by weight.

**13.** A compatibility, dispersion and crushing agent used in the course of operations of dispersion and crushing of aqueous pigment suspensions formulated from a mixture of mineral pigments, of which at least one is hydrated calcium sulphate with a view to cancel the viscosifying effect caused by the presence of the said sulphate, characterized by the fact that the said agent is a copolymer of the following general formula:

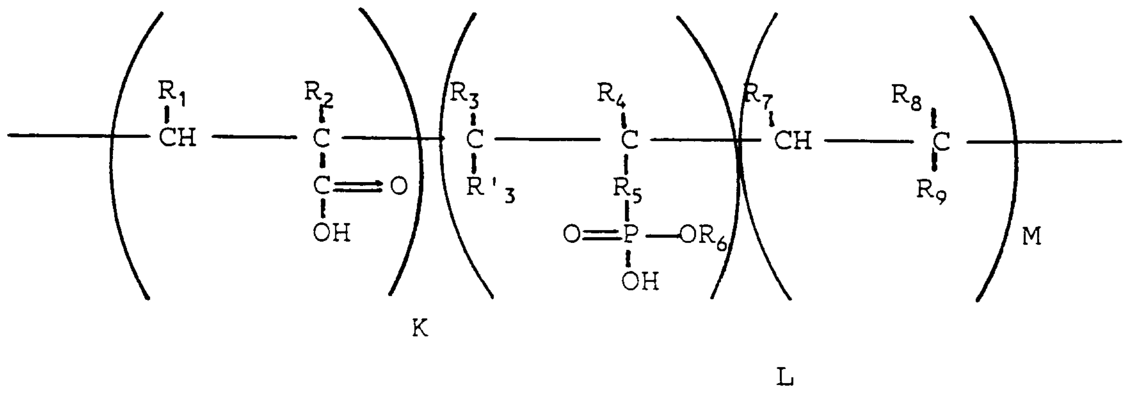

represented by the formula:-$(A)_K$-$(B)_L$-$(C)_M$-

in which the ethylenic monomer (B) possesses a phosphated or phosphonated function, the monomer (A) is an ethylenic monomer with a carboxylic function and the monomer (C) is an ethylenic monomer of the esters or substitutes type, and in which L takes a value included between 5 and 95 parts by weight with K + L + M = 100 parts by weight, K and M being able to separately take the value 0, and in which:

- $R_1$ is hydrogen, a carboxylic function or a carboxylic function esterified by an alcohol with $C_1$ to $C_{12}$ preferably by an alcohol with $C_1$ to $C_3$,
- $R_2$ is hydrogen or an alkyl with $C_1$ to $C_{12}$ preferably with $C_1$ to $C_3$,
- $R_3$ and $R'_3$ are hydrogen, a carboxylic function, a halogen, an alkyl with $C_1$ to $C_{12}$ preferably with $C_1$ to $C_3$, an aryl substituted or not,
- $R_4$ is hydrogen, an alkyl with $C_1$ to $C_{12}$ preferably with $C_1$ to $C_3$, an aryl substituted or not, a carboxylic function, or a carboxylic function esterified by an alcohol with $C_1$ to $C_{12}$ preferably with $C_1$ to $C_3$.
- $R_5$ is:
  a) in the case of a phosphate function,
  - either a carboxylic ester of ethylene oxide or of propylene oxide corresponding to the formula:

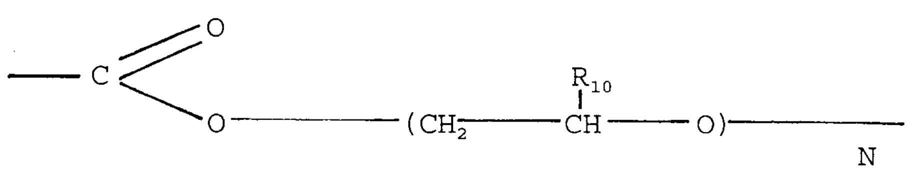

in which $R_{10}$ can be hydrogen or a methyl group and N can take values in the range 1 to 50 and preferably 1 to 10,

- or a carboxylic ester of an alkyl, an aryl or alkaryl of the formula:

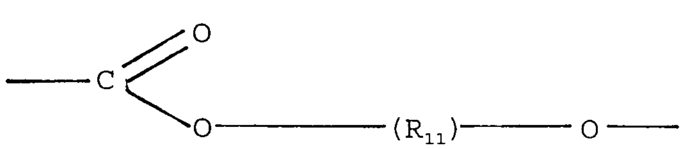

in which $R_{11}$ can take the values $C_1$ to $C_{12}$,

- or a substituted amide of the formula:

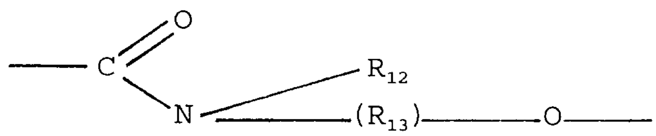

in which $R_{12}$ is hydrogen or an alkyl with $C_1$ to $C_{12}$ and preferably $C_1$ to $C_3$, an aryl with $C_5$ to $C_6$ substituted or not, or an alkaryl, $R_{13}$ can be an alkyl with $C_1$ to $C_{12}$ and preferably $C_1$ to $C_3$, an aryl with $C_5$ or $C_6$ substituted or not or an alkaryl,

- or oxygen.

b) in the case of a phosphonate function:

- either an alkyl with $C_1$ to $C_{12}$ and preferably from $C_1$ to $C_3$,
- or an aryl with $C_5$ to $C_6$ substituted or not,
- or an alkaryl,
- or an ester with $C_1$ to $C_{12}$ and preferably with $C_1$ to $C_3$,
- or a substituted amide,

- $R_6$ is hydrogen, a cation, an ammonium group, an amine, an alkyl with $C_1$ to $C_3$, an aryl with $C_5$ or $C_6$ substituted or not, an alkaryl, an ester with $C_1$ to $C_{12}$ and preferably with $C_1$ to $C_3$, or a substituted amide,
- $R_7$ is hydrogen, a carboxylic group, an ester with $C_1$ to $C_{12}$ and preferably with $C_1$ to $C_3$, an alkyl with $C_1$ to $C_{12}$ and preferably with $C_1$ to $C_3$, an aryl with $C_5$ or $C_6$, or an alkaryl,
- $R_8$ is hydrogen, a carboxylic group, an alkyl with $C_1$ to $C_3$, or a halogen,
- $R_9$ is an ester with $C_1$ to $C_{12}$ and preferably with $C_1$ to $C_5$, an amide substituted or not, an alkyl with $C_1$ to $C_{12}$ and preferably with $C_1$ to $C_3$, an aryl with $C_5$ or $C_6$, an alkaryl, a halogen, a carboxylic group or an alkyl or sulfonated or sulphated aryl group ,

with the exception of the following radicals:

$R_5$ =

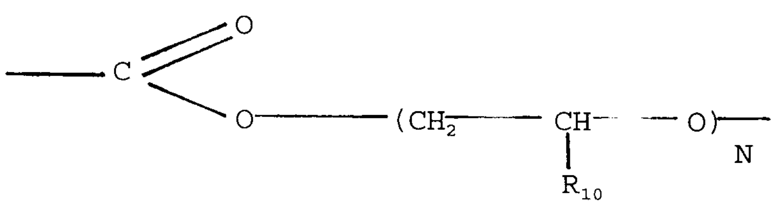

with N = 1

or $R_5$ =

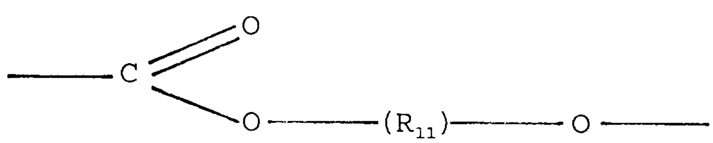

with $R_{11}$ an alkyl radical with $C_1$ to $C_8$.

when L takes a value between 5 and 8 parts by weight with $R_3$ = H, $R'_3$ = H, $R_4$ = H or an alkyl with $C_1$ to $C_8$. and with the exception also of the following radicals:

$R_5$ =

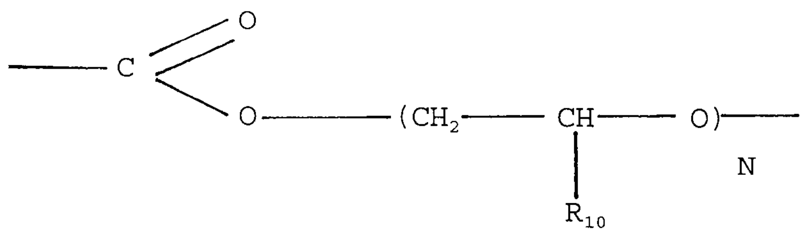

with N = 1 to 30
or $R_5$ =

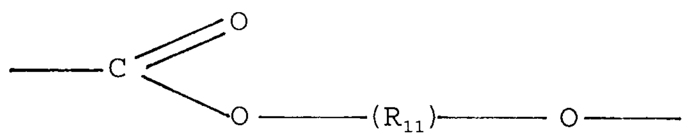

with $R_{11}$ an alkyl radical with $C_1$ to $C_{12}$.
when $R_1$ = H, $R_2$ = H or an alkyl with $C_1$ to $C_{12}$,
$R_3$ = $R'_3$ = H, $R_4$ = H or an alkyl with $C_1$ to $C_{12}$,
$R_6$ = H, $R_7$ = H, $R_8$ = H or an alkyl with $C_1$ to $C_3$
and $R_9$ is a non substituted amide with K and M
not equal to 0.
or when $R_3$ = $R'_3$ = H, $R_4$ = H or an alkyl with $C_1$ to $C_{12}$,
$R_6$ = H, $R_7$ = H or an alkyl with C1 to C3,
$R_8$ = H or an alkyl with $C_1$ to $C_3$ and
$R_9$ is an ester with $C_1$ to $C_{12}$ or an aryl with $C_5$
or $C_6$.

**14.** A compatibility, dispersion and crushing agent as described in claim 13 characterised by the fact that the said copolymer has a specific viscosity between 0.2 and 10.0 and preferably between 0.25 and 5.0 and very preferably between 0.4 and 1.2.

## Patentansprüche

## Patentansprüche für folgende Vertragsstaaten : AT, BE, DE, GB, IT, NL, SE

**1.** Verwendung eines Copolymers der allgemeinen Formel:

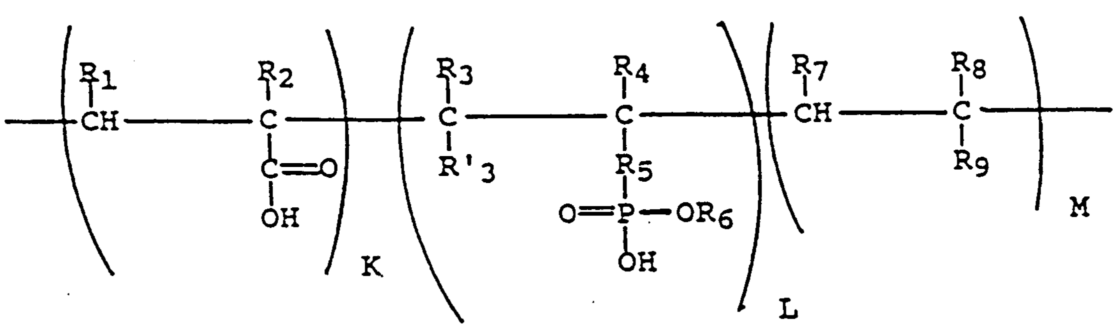

symbolisiert durch die Formel:

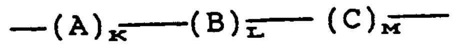

worin das ethylenisch ungesättigte Monomer (B) eine Phosphat- oder Phosphonat- Funktion besitzt, das Monomer (A) ein ethylenisches Monomer mit einer Carboxylfunktion ist und das Monomer (C) ein

ethylenisches Monomer vom Estertyp oder ein substituiertes Monomer ist, und worin L eine Zahl zwischen 5 und 95 Gewichtsteilen ist, wobei K + L + M 100 Gewichtsteile bedeuten, K und M getrennt den Wert 0 darstellen können, und worin:

- $R_1$ ein Wasserstoffatom, eine Carboxylgruppe oder eine mit einem C1-C12-Alkohol, und vorzugsweise mit einem C1-C3-Alkohol veresterte Carboxylfunktion ist,
- $R_2$ ein Wasserstoffatom oder ein C1-C12, vorzugsweise C1-C3-Alkyl ist,
- $R_3$ und $R'_3$ Wasserstoff, Carboxyl, ein Halogenatom, ein C1-C12-, und vorzugsweise ein C1-C3-Alkyl, eine substituierte oder unsubstituierte Arylgruppe sind,
- $R_4$ ein Wasserstoffatom, ein C1-C12-, vorzugsweise ein C1-C3-Alkyl, ein substituiertes oder unsubstituiertes Aryl, eine Carboxylgruppe oder eine durch einen C1-C12, und vorzugsweise C1-C3-Alkohol veresterte Carboxylgruppe ist,
- $R_5$ ist:

  a) Im Falle einer Phosphatfunktion

  - ein Carboxylester eines Ethylenoxids oder Propylenoxids der folgenden Formel:

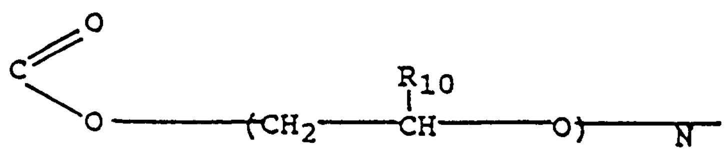

    worin $R_{10}$ ein Wasserstoffatom oder eine Methylgruppe sein kann und N einen Wert von 1 bis 50 und vorzugsweise von 1 bis 10 bedeuten kann,

  - oder einen Alkyl-, Aryl- oder Aralkylester einer Carbonsäure der Formel:

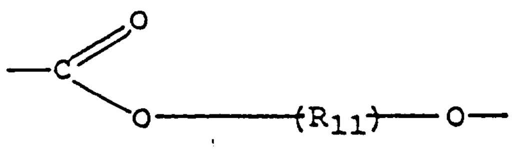

    worin $R_{11}$ die Werte C1-C12 besitzen kann,

  - oder ein substituiertes Amid der Formel:

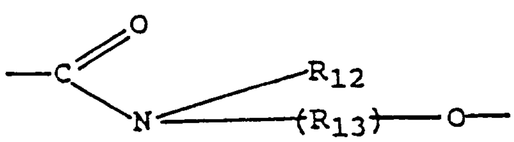

    worin $R_{12}$ ein Wasserstoffatom oder ein C1-C12-, und vorzugsweise C1-C3-Alkyl, ein C5- oder C6-Aryl, das substituiert oder nicht substituiert sein kann,oder ein Alkylaryl $R_{13}$ ein C1-C12- und vorzugsweise ein C1-C3-Alkyl sein kann, ein substituiertes oder nicht-substituiertes C5- oder C6-Aryl oder ein Alkylaryl sein kann,

  - oder Sauerstoff.

  b) Im Falle einer Phosphonatfunktion:

  - ein C1-C12-, und vorzugsweise C1-C3-Alkyl,
  - oder substituiertes oder unsubstituiertes C5- oder C6-Aryl,
  - oder ein Alkylaryl,
  - oder ein C1-C12-, und vorzugsweise C1-C3-Ester,
  - oder ein substituiertes Amid,

- $R_6$ ein Wasserstoffatom, ein Kation, eine Ammoniumgruppe, ein Amin, ein C1-C3-Alkyl, eine substituierte oder unsubstituierte C5- oder C6-Arylgruppe, ein Alkylaryl, ein C1-C12-, und vorzugsweise ein C1-C3-Ester, oder ein substituiertes Amid,
- $R_7$ Wasserstoff, eine Carboxylgruppe, ein C1-C12-, und vorzugsweise ein C1-C3-Ester, ein C1 bis C12-, und vorzugsweise ein C1 bis C3-Alkyl, ein C5- oder C6-Aryl, ein Alkaryl;
- $R_8$ Wasserstoff, eine Carboxylgruppe, eine C1-C3-Alkylgruppe, oder ein Halogenatom,

- $R_9$ ein C1-C12-, und vorzugsweise ein C1-C5-Ester, ein substituiertes oder nicht-substituiertes Amid, ein C1-C12-, und vorzugsweise ein C1-C3-Alkyl, ein C5- oder C6-Aryl, ein Alkylaryl, ein Halogen, eine Carboxylgruppe oder eine Alkylgruppe oder sulphonierte oder sulphatierte Arylgruppe,

als Kompatibilitätsmittel, Dispersionsmittel und Zerkleinerungsmittel zur Anwendung während der Dispersion und Vermahlung der wässerigen pigmentierten formulierten Suspensionen ausgehend von einer Mischung aus mineralischen Pigmenten, die verschieden sind von gequollenen Tonen, und von denen mindestens eines ein Calciumsulfathydrat ist.

**2.** Verwendung eines Copolymers nach Anspruch 1, dadurch gekennzeichnet, daß das Copolymer durch Copolymerisation gemäß bekannter Verfahren unter atmosphärischem Druck oder unter Druck in Gegenwart von Initiatoren und geeigneten Regulatoren in einem wässerigen, alkoholischen, wässerigalkoholischen, aromatischen, aliphatischen oder einem Halogenlösungsmittel resultiert, und aus mindestens zwei ethylenischen Monomeren besteht, von denen eines, das Monomer (B) eine Phosphat- oder Phosphonat-Funktion besitzt.

**3.** Verwendung eines Copolymers nach Anspruch 1 oder 2, dadurch gekennzeichnet, daß das Polymerisationsmilieu ausgewählt ist aus der Gruppe bestehend aus Wasser, Methanol, Ethanol, Propanol, Isopropanol, Butanolen, Dimethylformamid, Dimethylsulfoxid, Tetrahydrofuran, Aceton, Methylethylketon, Ethylacetat, Butylacetat, Hexan, Heptan, Benzol, Toluol, Ethylbenzol, Xylol, Mercaptoethanol, tert.-Dodecylmercaptan, Thioglycolsäure und ihren Estern, N-Dodecylmercaptan, Essig-, Wein-, Milch-, Zitronen-, Glucon-, und Glucoheptonsäure, 2-Mercaptopropionsäure , Thiodiethanol, den halogenierten Lösungsmitteln wie z.B. Tetrachlorkohlenstoff, Chloroform, Methylenchlorid, Methylchlorid, den Monopropylenglykolethern, Diethylenglykolethern.

**4.** Verwendung eines Copolymers nach einem der Ansprüche 1 bis 3, dadurch gekennzeichnet, daß das Copolymer eine spezifische Viskosität zwischen 0.2 und 10.0, vorzugsweise zwischen 0.25 und 5.0, und insbesondere zwischen 0.4 und 1.2 besitzt.

**5.** Verwendung eines Copolymers nach einem der Ansprüche 1 bis 4, dadurch gekennzeichnet, daß das Copolymer in saurer Form eingesetzt wird.

**6.** Verwendung eines Copolymers nach einem der Ansprüche 1 bis 4, dadurch gekennzeichnet, daß das Copolymer mindestens teilweise durch ein Neutralisationsmittel mit einer monovalenten Funktion neutralisiert ist.

**7.** Verwendung eines Copolymers nach Anspruch 6, dadurch gekennzeichnet, daß das Neutralisationsmittel ausgewählt ist aus der Gruppe der Alkalimetalle und ähnlicher Stoffe, und vorzugsweise aus der Gruppe bestehend aus Lithium, Natrium, Kalium, Ammonium oder gegebenenfalls Amin.

**8.** Verwendung eines Copolymers nach einem der Ansprüche 6 oder 7, dadurch gekennzeichnet, daß das einwertige Neutralisationsmittel mit einem mehrwertigen Neutralisationsmittel assoziert ist.

**9.** Verwendung eines Copolymers nach Anspruch 8, dadurch gekennzeichnet, daß das mehrwertige Neutralisationsmittel ausgewählt ist aus der Gruppe bestehend aus Erdalkalimetallen oder ähnlichen, vorzugsweise aus Calcium und Magnesium.

**10.** Wässerige pigmenthaltige Suspension, die mindestens Calciumsulfathydrat enthält, dadurch gekennzeichnet, daß sie das in den Ansprüchen 1 bis 9 beschriebene Copolymere enthält und dadurch charakterisiert ist, daß es nach den folgenden Stufen hergestellt wird:

a) das Präparat wird durch Dispergierung einer wässerigen Suspension von Calciumsulfathydrat unter Rühren, allein oder in Mischung, hergestellt, indem man zuerst alles oder ein Teil des erfindungsgemäßen Mittels in die wässerige Phase einbringt, dann das Pigment (oder die Pigmente) auf eine Weise, um eine flüssige und wünschenwerterweise homogene Suspension zu erhalten,

b) man bringt kontinuierlich die gemäß (a) hergestellte Suspension in eine Zerkleinerungszone, die aus einer Mühle, die Mikroelemente enthält, besteht,

c) man hält die Temperatur der Suspension während des Zerkleinerns auf einem Niveau unterhalb von 100 °C, vorzugsweise zwischen Raumtemperatur und 80 °C,

d) man durchknetet die zu zerkleinernde Suspension in Gegenwart der Mikroelemente während einer Zeitspanne, die erforderlich ist, um die gewünschte Korngröße zu erreichen,
e) gegebenenfalls gibt man während des Zermahlens mindestens auch einmal eine komplementäre Fraktion des Mittels zu,
f) am Ausgang der Mühle trennt man kontinuierlich die fein zerkleinerte Suspension aus CaSO4, 2H2O allein oder in Mischung mit den Mahlkörpern und die zurückgebliebenen zu groben Teilchen,
g) gegebenenfalls führt man in die fein gemahlene Suspension mindestens einen Fließmodifikator ein.

**11.** Wässerige pigmenthaltige Suspension gemäß Anspruch 10, dadurch gekennzeichnet, daß das Copolymer in einem Verhältnis von 0.05 bis 4 Gew.-% aktiver Materie bezogen auf das Trockengewicht des mineralischen Materials, und vorzugsweise in einem Verhältnis von 0.5 bis 2.5 %, eingebracht wird.

**12.** Wässerige pigmenthaltige Suspension nach den Ansprüchen 10 oder 11, dadurch gekennzeichnet, daß die Konzentration an Trockenmaterie mindestens 65 Gew.-%, und vorzugsweise zwischen 70 und 80 Gew.-% beträgt.

**13.** Verwendung der wässerigen pigmenthaltigen Suspension nach einem der Ansprüche 1 bis 12 als Pigmentfüller zur Herstellung von Papier, Farben und Kunststoffen.

**14.** Kompatibilitätsmittel, Dispersionsmittel zur Anwendung während der Dispersion und Vermahlung für wässerige pigmenthaltige Suspensionen, die aus einer Mischung aus mineralischen Pigmenten formuliert sind, von denen mindestens eines ein Calciumsulfathydrat ist, um die durch die Gegenwart des Sulfates hervorgerufene Viskosität zu eliminieren, dadurch gekennzeichnet, daß dieses Mittel ein Copolymer der allgemeinen Formel ist:

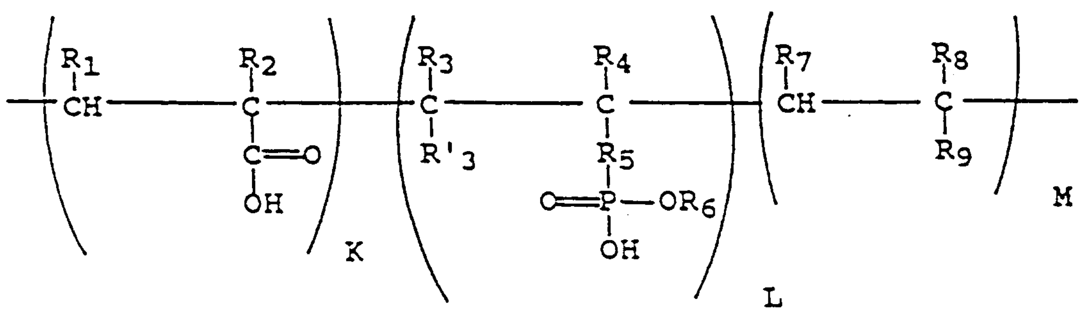

symbolisiert durch die Formel:$-(A)_K-(B)_L-(C)_M-$
worin das ethylenische Monomer (B) eine Phosphat- oder Phosphonat- Funktion besitzt, das Monomer (A) ein ethylenisches Monomer mit einer Carboxylfunktion und das Monomer (C) ein ethylenisches Monomer vom Estertyp oder ein substituiertes Monomer ist, und worin L eine Zahl zwischen 5 und 95 Gewichtsteilen ist, wobei K + L + M 100 Gewichtsteile bedeuten, K und M getrennt den Wert 0 darstellen können, und worin:

- $R_1$ ein Wasserstoffatom, eine Carboxylgruppe oder eine mit einem C1-C12-Alkohol, und vorzugsweise mit einem C1-C3-Alkohol veresterte Carboxylfunktion ist,
- $R_2$ ein Wasserstoffatom oder ein C1-C12, vorzugsweise C1-C3-Alkyl ist,
- $R_3$ und $R'_3$ Wasserstoff, Carboxyl, ein Halogenatom, ein C1-C12-, und vorzugsweise ein C1-C3-Alkyl, eine substituierte oder unsubstituierte Arylgruppe sind,
- $R_4$ ein Wasserstoffatom, ein C1-C12-, vorzugsweise ein C1-C3-Alkyl, ein substituiertes oder unsubstituiertes Aryl, eine Carboxylgruppe, oder eine durch einen C1-C12-, und vorzugsweise C1-C3-Alkohol veresterte Carboxylgruppe ist,
- $R_5$ ist:
  a) Im Falle einer Phosphatfunktion

- einen Carboxylester eines Ethylenoxids oder Propylenoxids der folgenden Formel:

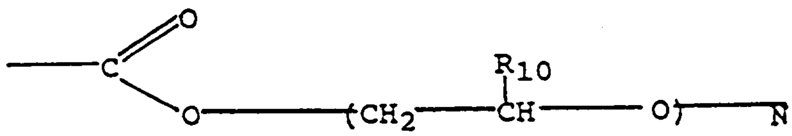

worin $R_{10}$ ein Wasserstoffatom oder eine Methylgruppe sein kann und N einen Wert von 1 bis 50 und vorzugsweise von 1 bis 10 bedeuten kann,

- oder einen Alkyl-, Aryl- oder Aralkylester einer Carbonsäure der Formel:

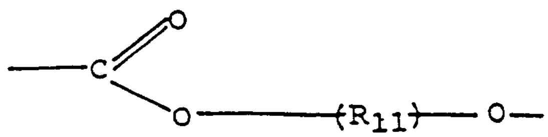

worin $R_{11}$ die Werte C1-C12 besitzen kann,

- oder ein substituiertes Amid der Formel:

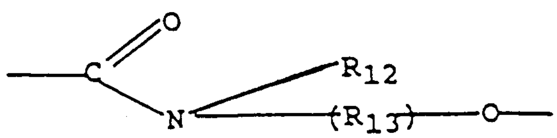

worin $R_{12}$ ein Wasserstoffatom oder ein C1-C12-, und vorzugsweise C1-C3-Alkyl, ein C5- oder C6-Aryl, das substituiert oder nicht substituiert sein kann, $R_{13}$ ein C1-C12-und vorzugsweise ein C1-C3-Alkyl sein kann, ein substituiertes oder nicht-substituiertes C5- oder C6-Aryl oder ein Alkylaryl sein kann,

- oder Sauerstoff.

b) Im Falle einer Phosphonatfunktion:

- ein C1-C12-, und vorzugsweise C1-C3-Alkyl,
- oder substituiertes oder unsubstituiertes C5- oder C6-Aryl,
- oder ein Alkylaryl,
- oder ein C1-C12-, und vorzugsweise C1-C3-Ester,
- oder ein substituiertes Amid,

- $R_6$ ein Wasserstoffatom, ein Kation, eine Ammoniumgruppe, ein Amin, ein C1-C3-Alkyl, eine substituierte oder unsubstituierte C5- oder C6-Arylgruppe, ein Alkylaryl, ein C1-C12-, und vorzugsweise ein C1-C3-Ester, oder ein substituiertes Amid,
- $R_7$ Wasserstoff, eine Carboxylgruppe, ein C1-C12-, und vorzugsweise ein C1-C3-Ester, ein C1-C12-, und vorzugsweise ein C1-C3-Alkyl, ein C5- oder C6-Aryl, ein Alkaryl;
- $R_8$ Wasserstoff, eine Carboxylgruppe, eine C1-C3-Alkylgruppe, oder ein Halogenatom,
- $R_9$ ein C1-C12-, und vorzugsweise ein C1-C5-Ester, ein substituiertes oder nicht-substituiertes Amid, ein C1-C12-, und vorzugsweise ein C1-C3-Alkyl, ein C5- oder C6-Aryl, ein Alkylaryl, ein Halogen, eine Carboxylgruppe oder eine Alkylgruppe oder sulphonierte oder sulphatierte Arylgruppe,

mit der Ausnahme der Radikale:

$R_5$ =

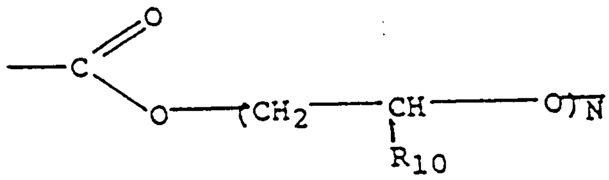

mit N = 1
oder
$R_5$ =

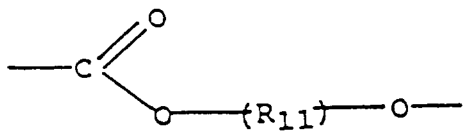

wobei $R_{11}$ ein C1-C8-Alkylradikal ist, wenn L einen Wert zwischen 5 und 8 Gewichtsteilen besitzt, mit $R_3$ = H, $R'_3$ = H, $R_4$ = H oder einem C1-C8-Alkyl

- sowie ausgenommen die Radikale
  $R_5$ =

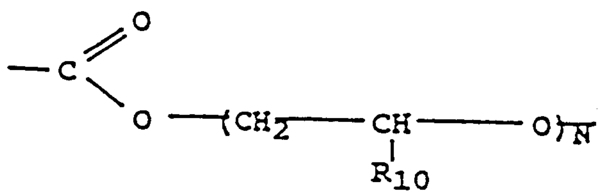

worin N = 1 bis 30
oder
$R_5$ =

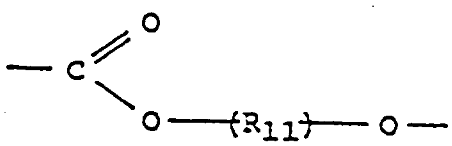

mit einem $R_{11}$-Radikal mit C1-C12
wenn $R_1$ = H, $R_2$ = H oder C1-C12-Alkyl, $R_3$ = R'3 = H, $R_4$ = H oder C1-C12-Alkyl, $R_6$ = H, $R_7$ = H, $R_8$ = H oder C1-C3-Alkyl und $R_9$ ist ein nicht substituiertes Amid, wobei K und M verschieden von 0 sind,
oder wenn $R_3$ = $R'_3$ = H, $R_4$ = H oder C1-C12-Alkyl, $R_6$ = H, $R_7$ = H, oder C1-C3-Alkyl, $R_8$ = H oder C1-C3-Alkyl und $R_9$ ist ein C1-C12-Ester oder ein C5- oder C6-Aryl.

**15.** Kompatibilitätsmittel, Dispersionsmittel und Zerkleinerungsmittel gemäß Anspruch 14, dadurch gekennzeichnet, daß das Copolymer eine spezifische Viskosität zwischen 0.2 und 10, und vorzugsweise zwischen 0.25 und 5.0, und insbesondere zwischen 0.4 und 1.2 besitzt.

**Patentansprüche für folgenden Vertragsstaat : ES**

1. Verwendung eines Copolymers der allgemeinen Formel:

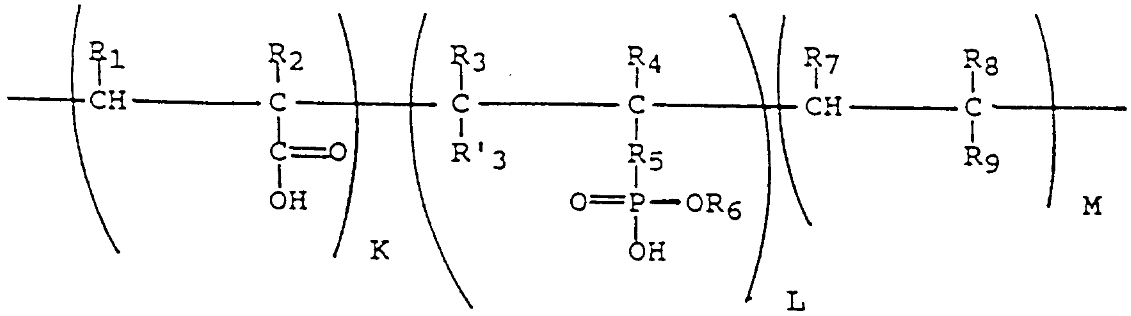

symbolisiert durch die Formel:

$$-(A)_K-(B)_L-(C)_M-$$

worin das ethylenisch ungesättigte Monomer (B) eine Phosphat- oder Phosphonat- Funktion besitzt, das Monomer (A) ein ethylenisches Monomer mit einer Carboxylfunktion ist und das Monomer (C) ein ethylenisches Monomer vom Estertyp oder ein substituiertes Monomer ist, und worin L eine Zahl zwischen 5 und 95 Gewichtsteilen ist, wobei K + L + M 100 Gewichtsteile bedeuten, K und M getrennt den Wert 0 darstellen können, und worin:

- $R_1$ ein Wasserstoffatom, eine Carboxylgruppe oder eine mit einem C1-C12-Alkohol, und vorzugsweise mit einem C1-C3-Alkohol veresterte Carboxylfunktion ist,
- $R_2$ ein Wasserstoffatom oder ein C1-C12, vorzugsweise C1-C3-Alkyl ist,
- $R_3$ und $R'_3$ Wasserstoff, Carboxyl, ein Halogenatom, ein C1-C12-, und vorzugsweise ein C1-C3-Alkyl, eine substituierte oder unsubstituierte Arylgruppe sind,
- $R_4$ ein Wasserstoffatom, ein C1-C12-, vorzugsweise ein C1-C3-Alkyl, ein substituiertes oder unsubstituiertes Aryl, eine Carboxylgruppe oder eine durch einen C1-C12, und vorzugsweise C1-C3-Alkohol veresterte Carboxylgruppe ist,
- $R_5$ ist:

  a) Im Falle einer Phosphatfunktion

  - ein Carboxylester eines Ethylenoxids oder Propylenoxids der folgenden Formel:

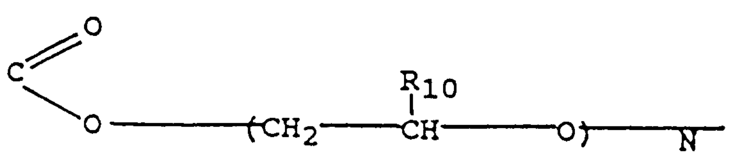

worin $R_{10}$ ein Wasserstoffatom oder eine Methylgruppe sein kann und N einen Wert von 1 bis 50 und vorzugsweise von 1 bis 10 bedeuten kann,

  - oder einen Alkyl-, Aryl- oder Aralkylester einer Carbonsäure der Formel:

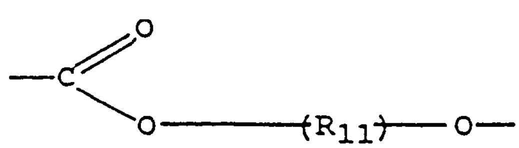

worin $R_{11}$ die Werte C1-C12 besitzen kann,

- oder ein substituiertes Amid der Formel:

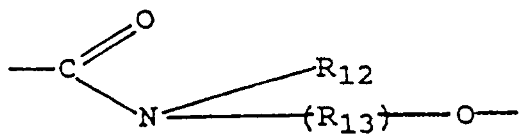

worin $R_{12}$ ein Wasserstoffatom oder ein C1-C12-, und vorzugsweise C1-C3-Alkyl, ein C5- oder C6-Aryl, das substituiert oder nicht substituiert sein kann,oder ein Alkylaryl $R_{13}$ ein C1-C12- und vorzugsweise ein C1-C3-Alkyl sein kann, ein substituiertes oder nicht-substituiertes C5- oder C6-Aryl oder ein Alkylaryl sein kann,

- oder Sauerstoff.

b) Im Falle einer Phosphonatfunktion:
- ein C1-C12-, und vorzugsweise C1-C3-Alkyl,
- oder substituiertes oder unsubstituiertes C5- oder C6-Aryl,
- oder ein Alkylaryl,
- oder ein C1-C12-, und vorzugsweise C1-C3-Ester,
- oder ein substituiertes Amid,

- $R_6$ ein Wasserstoffatom, ein Kation, eine Ammoniumgruppe, ein Amin, ein C1-C3-Alkyl, eine substituierte oder unsubstituierte C5- oder C6-Arylgruppe, ein Alkylaryl, ein C1-C12-, und vorzugsweise ein C1-C3-Ester, oder ein substituiertes Amid,
- $R_7$ Wasserstoff, eine Carboxylgruppe, ein C1-C12-, und vorzugsweise ein C1-C3-Ester, ein C1 bis C12-, und vorzugsweise ein C1 bis C3-Alkyl, ein C5- oder C6-Aryl, ein Alkaryl;
- $R_8$ Wasserstoff, eine Carboxylgruppe, eine C1-C3-Alkylgruppe, oder ein Halogenatom,
- $R_9$ ein C1-C12-, und vorzugsweise ein C1-C5-Ester, ein substituiertes oder nicht-substituiertes Amid, ein C1-C12-, und vorzugsweise ein C1-C3-Alkyl, ein C5- oder C6-Aryl, ein Alkylaryl, ein Halogen, eine Carboxylgruppe oder eine Alkylgruppe oder sulphonierte oder sulphatierte Arylgruppe,

als Kompatibilitätsmittel, Dispersionsmittel und Zerkleinerungsmittel zur Anwendung während der Dispersion und Vermahlung der wässerigen pigmentierten formulierten Suspensionen ausgehend von einer Mischung aus mineralischen Pigmenten, die verschieden sind von gequollenen Tonen, und von denen mindestens eines ein Calciumsulfathydrat ist.

**2.** Verwendung eines Copolymers nach Anspruch 1, dadurch gekennzeichnet, daß das Copolymer durch Copolymerisation gemäß bekannter Verfahren unter atmosphärischem Druck oder unter Druck in Gegenwart von Initiatoren und geeigneten Regulatoren in einem wässerigen, alkoholischen, wässerigalkoholischen, aromatischen, aliphatischen oder einem Halogenlösungsmittel resultiert, und aus mindestens zwei ethylenischen Monomeren besteht, von denen eines, das Monomer (B) eine Phosphat- oder Phosphonat-Funktion besitzt.

**3.** Verwendung eines Copolymers nach Anspruch 1 oder 2, dadurch gekennzeichnet, daß das Polymerisationsmilieu ausgewählt ist aus der Gruppe bestehend aus Wasser, Methanol, Ethanol, Propanol, Isopropanol, Butanolen, Dimethylformamid, Dimethylsulfoxid, Tetrahydrofuran, Aceton, Methylethylketon, Ethylacetat, Butylacetat, Hexan, Heptan, Benzol, Toluol, Ethylbenzol, Xylol, Mercaptoethanol, tert.-Dodecylmercaptan, Thioglycolsäure und ihren Estern, N-Dodecylmercaptan, Essig-, Wein-, Milch-, Zitronen-, Glucon-, und Glucoheptonsäure, 2-Mercaptopropionsäure , Thiodiethanol, den halogenierten Lösungsmitteln wie z.B. Tetrachlorkohlenstoff, Chloroform, Methylenchlorid, Methylchlorid, den Monopropylenglykolethern, Diethylenglykolethern.

**4.** Verwendung eines Copolymers nach einem der Ansprüche 1 bis 3, dadurch gekennzeichnet, daß das Copolymer eine spezifische Viskosität zwischen 0.2 und 10.0, vorzugsweise zwischen 0.25 und 5.0, und insbesondere zwischen 0.4 und 1.2 besitzt.

**5.** Verwendung eines Copolymers nach einem der Ansprüche 1 bis 4, dadurch gekennzeichnet, daß das Copolymer in saurer Form eingesetzt wird.

**6.** Verwendung eines Copolymers nach einem der Ansprüche 1 bis 4, dadurch gekennzeichnet, daß das Copolymer mindestens teilweise durch ein Neutralisationsmittel mit einer monovalenten Funktion neutralisiert ist.

**7.** Verwendung eines Copolymers nach Anspruch 6, dadurch gekennzeichnet, daß das Neutralisationsmittel ausgewählt ist aus der Gruppe der Alkalimetalle und ähnlicher Stoffe, und vorzugsweise aus der Gruppe bestehend aus Lithium, Natrium, Kalium, Ammonium oder gegebenenfalls Amin.

**8.** Verwendung eines Copolymers nach einem der Ansprüche 6 oder 7, dadurch gekennzeichnet, daR das einwertige Neutralisationsmittel mit einem mehrwertigen Neutralisationsmittel assoziert ist.

**9.** Verwendung eines Copolymers nach Anspruch 8, dadurch gekennzeichnet, daß das mehrwertige Neutralisationsmittel ausgewählt ist aus der Gruppe bestehend aus Erdalkalimetallen oder ähnlichen, vorzugsweise aus Calcium und Magnesium.

**10.** Wässerige pigmenthaltige Suspension, die mindestens Calciumsulfathydrat enthält, dadurch gekennzeichnet, daß sie das Copolymer nach einem der Ansprüche 1 bis 9 enthält und als Pigmentfüllstoff zur Herstellung von Papier, Farben und Kunststoffen verwendet wird, und dadurch charakterisiert ist, daß es nach den folgenden Stufen hergestellt wird:

a) das Präparat wird durch Dispergierung einer wässerigen Suspension von Calciumsulfathydrat unter Rühren, allein oder in Mischung, hergestellt, indem man zuerst alles oder ein Teil des erfindungsgemäßen Mittels in die wässerige Phase einbringt, dann das Pigment (oder die Pigmente) auf eine Weise, um eine flüssige und wünschenwerterweise homogene Suspension zu erhalten,

b) man bringt kontinuierlich die gemäß (a) hergestellte Suspension in eine Zerkleinerungszone, die aus einer Mühle, die Mikroelemente enthält, besteht,

c) man hält die Temperatur der Suspension während des Zerkleinerns auf einem Niveau unterhalb von 100 °C, vorzugsweise zwischen Raumtemperatur und 80 °C,

d) man durchknetet die zu zerkleinernde Suspension in Gegenwart der Mikroelemente während einer Zeitspanne, die erforderlich ist, um die gewünschte Korngröße zu erreichen,

e) gegebenenfalls gibt man während des Zermahlens mindestens auch einmal eine komplementäre Fraktion des Mittels zu,

f) am Ausgang der Mühle trennt man kontinuierlich die fein zerkleinerte Suspension aus CaSO4, 2H2O allein oder in Mischung mit den Mahlkörpern und die zurückgebliebenen zu groben Teilchen,

g) gegebenenfalls führt man in die fein gemahlene Suspension mindestens einen Fließmodifikator ein.

**11.** Wässerige pigmenthaltige Suspension gemäß Anspruch 10, dadurch gekennzeichnet, daß das Copolymer in einem Verhältnis von 0.05 bis 4 Gew.-% aktiver Materie bezogen auf das Trockengewicht des mineralischen Materials, und vorzugsweise in einem Verhältnis von 0.5 bis 2.5 %, eingebracht wird.

**12.** Wässerige pigmenthaltige Suspension nach den Ansprüchen 10 oder 11, dadurch gekennzeichnet, daß die Konzentration an Trockenmaterie mindestens 65 Gew.-%, und vorzugsweise zwischen 70 und 80 Gew.-% beträgt.

**13.** Kompatibilitätsmittel, Dispersionsmittel zur Anwendung während der Dispersion und Vermahlung für wässerige pigmenthaltige Suspensionen, die aus einer Mischung aus mineralischen Pigmenten formuliert sind, von denen mindestens eines ein Calciumsulfathydrat ist, um die durch die Gegenwart des Sulfates hervorgerufene Viskosität zu eliminieren, dadurch gekennzeichnet, daß dieses Mittel ein Copolymer der allgemeinen Formel ist:

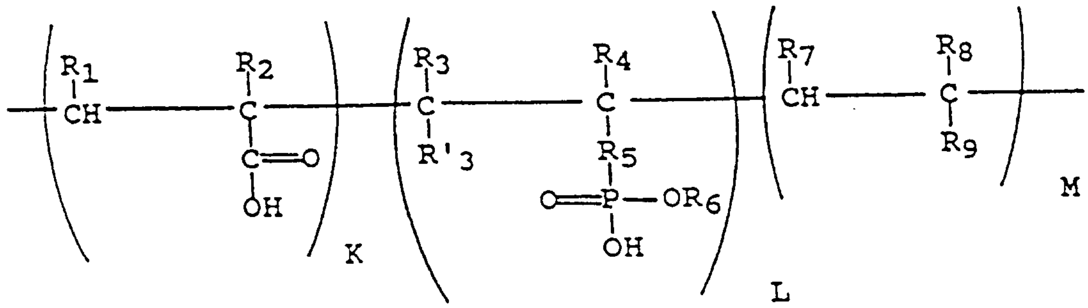

symbolisiert durch die Formel:-$(A)_K$-$(B)_L$-$(C)_M$-
worin das ethylenische Monomer (B) eine Phosphat- oder Phosphonat- Funktion besitzt, das Monomer (A) ein ethylenisches Monomer mit einer Carboxylfunktion und das Monomer (C) ein ethylenisches Monomer vom Estertyp oder ein substituiertes Monomer ist, und worin L eine Zahl zwischen 5 und 95 Gewichtsteilen ist, wobei K + L + M 100 Gewichtsteile bedeuten, K und M getrennt den Wert 0 darstellen können, und worin:

- $R_1$ ein Wasserstoffatom, eine Carboxylgruppe oder eine mit einem C1-C12-Alkohol, und vorzugsweise mit einem C1-C3-Alkohol veresterte Carboxylfunktion ist,
- $R_2$ ein Wasserstoffatom oder ein C1-C12, vorzugsweise C1-C3-Alkyl ist,
- $R_3$ und $R'_3$ Wasserstoff, Carboxyl, ein Halogenatom, ein C1-C12-, und vorzugsweise ein C1-C3-Alkyl, eine substituierte oder unsubstituierte Arylgruppe sind,
- $R_4$ ein Wasserstoffatom, ein C1-C12-, vorzugsweise ein C1-C3-Alkyl, ein substituiertes oder unsubstituiertes Aryl, eine Carboxylgruppe, oder eine durch einen C1-C12-, und vorzugsweise C1-C3-Alkohol veresterte Carboxylgruppe ist,
- $R_5$ ist:

a) Im Falle einer Phosphatfunktion

- einen Carboxylester eines Ethylenoxids oder Propylenoxids der folgenden Formel:

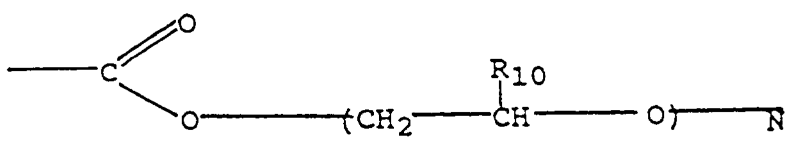

worin $R_{10}$ ein Wasserstoffatom oder eine Methylgruppe sein kann und N einen Wert von 1 bis 50 und vorzugsweise von 1 bis 10 bedeuten kann,

- oder einen Alkyl-, Aryl- oder Aralkylester einer Carbonsäure der Formel:

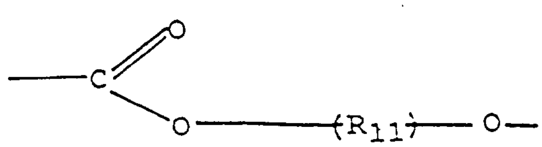

worin $R_{11}$ die Werte C1-C12 besitzen kann,

- oder ein substituiertes Amid der Formel:

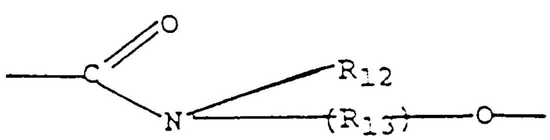

worin $R_{12}$ ein Wasserstoffatom oder ein C1-C12-, und vorzugsweise C1-C3-Alkyl, ein C5- oder C6-Aryl, das substituiert oder nicht substituiert sein kann, $R_{13}$ ein C1-C12-und

vorzugsweise ein C1-C3-Alkyl sein kann, ein substituiertes oder nicht-substituiertes C5- oder C6-Aryl oder ein Alkylaryl sein kann,
- oder Sauerstoff.

b) Im Falle einer Phosphonatfunktion:
- ein C1-C12-, und vorzugsweise C1-C3-Alkyl,
- oder substituiertes oder unsubstituiertes C5- oder C6-Aryl,
- oder ein Alkylaryl,
- oder ein C1-C12-, und vorzugsweise C1-C3-Ester,
- oder ein substituiertes Amid,

- $R_6$ ein Wasserstoffatom, ein Kation, eine Ammoniumgruppe, ein Amin, ein C1-C3-Alkyl, eine substituierte oder unsubstituierte C5- oder C6-Arylgruppe, ein Alkylaryl, ein C1-C12-, und vorzugsweise ein C1-C3-Ester, oder ein substituiertes Amid,
- $R_7$ Wasserstoff, eine Carboxylgruppe, ein C1-C12-, und vorzugsweise ein C1-C3-Ester, ein C1-C12-, und vorzugsweise ein C1-C3-Alkyl, ein C5- oder C6-Aryl, ein Alkaryl;
- $R_8$ Wasserstoff, eine Carboxylgruppe, eine C1-C3-Alkylgruppe, oder ein Halogenatom,
- $R_9$ ein C1-C12-, und vorzugsweise ein C1-C5-Ester, ein substituiertes oder nicht-substituiertes Amid, ein C1-C12-, und vorzugsweise ein C1-C3-Alkyl, ein C5- oder C6-Aryl, ein Alkylaryl, ein Halogen, eine Carboxylgruppe oder eine Alkylgruppe oder sulphonierte oder sulphatierte Arylgruppe,

mit der Ausnahme der Radikale:

$R_5$ =

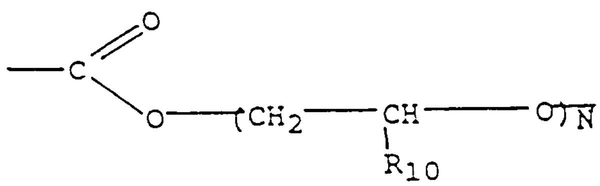

mit N = 1

oder

$R_5$ =

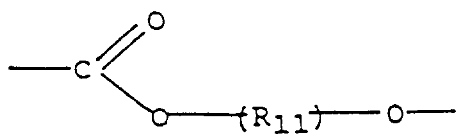

wobei $R_{11}$ ein C1-C8-Alkylradikal ist, wenn L einen Wert zwischen 5 und 8 Gewichtsteilen besitzt, mit $R_3$ = H, $R'_3$ = H, $R_4$ = H oder einem C1-C8-Alkyl

- sowie ausgenommen die Radikale

$R_5$ =

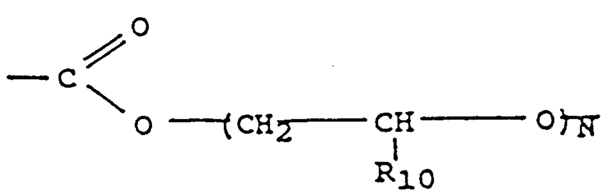

worin N = 1 bis 30

oder

$R_5$ =

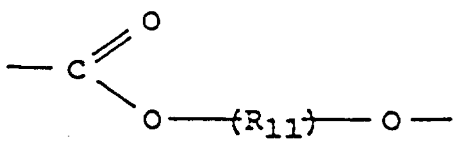

mit einem $R_{11}$-Radikal mit C1-C12

wenn $R_1$ = H, $R_2$ = H oder C1-C12-Alkyl, $R_3$ = R'3 = H, $R_4$ = H oder C1-C12-Alkyl, $R_6$ = H, $R_7$ = H, $R_8$ = H oder C1-C3-Alkyl und $R_9$ ist ein nicht substituiertes Amid, wobei K und M verschieden von 0 sind,

oder wenn $R_3$ = $R'_3$ = H, $R_4$ = H oder C1-C12-Alkyl, $R_6$ = H, $R_7$ = H, oder C1-C3-Alkyl, $R_8$ = H oder C1-C3-Alkyl und $R_9$ ist ein C1-C12-Ester oder ein C5- oder C6-Aryl.

**14.** Kompatibilitätsmittel, Dispersionsmittel und Zerkleinerungsmittel gemäß Anspruch 13, dadurch gekennzeichnet, daß das Copolymer eine spezifische Viskosität zwischen 0.2 und 10, und vorzugsweise zwischen 0.25 und 5.0, und insbesondere zwischen 0.4 und 1.2 besitzt.